# EUROPEAN PATENT SPECIFICATION

(11) **EP 4 371 754 B1**
(45) Date of publication and mention of the grant of the patent: **03.09.2025**
(21) Application number: 23186788.8
(22) Date of filing: 20.07.2023
(51) Int. Cl.: B32B 1/08, B32B 3/08, B32B 7/12, B32B 15/08, B32B 15/085, B32B 15/12, B32B 15/20, B32B 27/08, B32B 27/10, B32B 27/30, B32B 27/32, B32B 27/36, B32B 29/00

(54) **LAMINATED PACKAGING MATERIAL, METHOD FOR MANUFACTURING IT AND PACKAGING CONTAINERS COMPRISING IT**
MEHRSCHICHTIGES VERPACKUNGSMATERIAL, VERFAHREN ZU SEINER HERSTELLUNG UND DIESES ENTHALTENDE VERPACKUNGSBEHÄLTER
MATÉRIAU D'EMBALLAGE STRATIFIÉ, PROCÉDÉ POUR SA FABRICATION ET RÉCIPIENTS D'EMBALLAGE LE COMPRENANT

(30) Priority: 21.11.2022 EP 22208606
(43) Date of publication of application: 22.05.2024
(73) Proprietor: Tetra Laval Holdings & Finance S.A., 1009 Pully (CH)
(72) Inventor: RIBAS GARRIGA, Mariona, 22186 Lund (SE); DAHLQVIST, John, 22186 Lund (SE); ALFTREN, Eric, 22186 Lund (SE); HELLMALM, Marlene, 22186 Lund (SE); LINDSTRÖM, Gert, 22186 Lund (SE); KLÖFVER, Catarina, 22186 Lund (SE); SVÄRD, Dag, 22186 Lund (SE); KJELLANDER, Anton, 22186 Lund (SE)
(74) Representative: Tetra Pak Patent Attorneys

(56) References cited:
- EP-A1- 2 257 430
- EP-B1- 2 257 430
- US-A1- 2011 278 311

## Description

### Technical field

The present invention relates to laminated packaging materials comprising a bulk layer of paper or paperboard or other cellulose-based material and at least one barrier layer or multilayer barrier material portion, and to packaging containers comprising the laminated packaging material, for packaging of liquid, semi-liquid or viscous food products, including water. The invention further relates to a method for manufacturing the laminated packaging material.

### Background of the invention

Packaging containers of the single use carton type for liquid foods are often produced from a packaging laminate based on paperboard or carton. One such commonly occurring packaging container is marketed under the trademark Tetra Brik^{®} Aseptic and is principally employed for aseptic packaging of liquid foods such as milk, fruit juices etc, sold for long term ambient storage. The packaging material in this known packaging container is typically a laminate comprising a bulk or core layer, of paper, paperboard or other cellulose-based material, and outer, liquid-tight layers of thermoplastics. In order to render the packaging container gas-tight, in particular oxygen gas-tight, for example for the purpose of aseptic packaging and packaging of milk or fruit juice, the laminate in these packaging containers normally comprises at least one additional layer, most commonly an aluminium foil.

On the inside of the laminate, i.e. the side intended to face the filled food contents of a container produced from the laminate, there is an innermost layer, applied onto the aluminium foil, which innermost, inside layer may be composed of one or several part layers, comprising heat sealable thermoplastic polymers, such as adhesive polymers and/or polyolefins. Also on the outside of the bulk layer, there is an outermost heat sealable polymer layer.

The packaging containers are generally produced by means of modern, high-speed packaging machines of the type that form, fill and seal packages from a web or from prefabricated blanks of packaging material. Packaging containers may thus be produced by reforming a web of the laminated packaging material into a tube, such that the two longitudinal edges of the web are united to each other in an overlap joint by welding together the inner- and outermost heat sealable thermoplastic polymer layers. The tube is filled with the intended liquid food product and is thereafter divided into individual packages by repeated transversal seals of the tube at a predetermined distance from each other below the level of the contents in the tube. The packages are separated from the tube by incisions along the transversal seals and are given the desired geometric configuration, normally parallelepipedal, by fold forming along prepared crease lines in the packaging material.

The main advantage of this continuous tube-forming, filling and sealing packaging method concept is that the web may be sterilised continuously just before tube-forming, thus providing for the possibility of an aseptic packaging method, i.e. a method wherein the liquid content to be filled as well as the packaging material itself are reduced from bacteria and the filled packaging container is produced under clean conditions such that the filled package may be stored for a long time even at ambient temperature, without the risk of growth of micro-organisms in the filled product. Another important advantage of the Tetra Brik^{®} -type packaging method is, as stated above, the possibility of continuous high-speed packaging, which has considerable impact on cost efficiency.

Packaging containers for sensitive liquid food, for example milk or juice, can also be produced from sheet-like blanks or prefabricated blanks of the laminated packaging material of the invention. From a tubular blank of the packaging laminate that is folded flat, packages are produced by first of all building the blank up to form an open tubular container capsule, of which one open end is closed off by means of folding and heat-sealing of integral end panels. The thus closed container capsule is filled with the food product in question, e.g. juice, through its open end, which is thereafter closed off by means of further folding and heat-sealing of corresponding integral end panels. An example of a packaging container produced from sheet-like and tubular blanks is the conventional so-called gable-top package. There are also packages of this type which have a moulded top and/or screw cap made of plastic.

A layer of an aluminium foil in the packaging laminate provides gas barrier properties quite superior to most other gas barrier materials. The conventional aluminium-foil based packaging laminate for liquid food aseptic packaging is still the most cost-efficient and low-carbon-emitting liquid packaging material, at its level of performance, available on the market today. There is, however, a strive towards replacing the aluminium foil with non-foil barrier materials to reduce the carbon footprint further. Aluminium foil barriers for liquid carton food packaging are normally from 5 to 9 µm, such as most commonly about 6 µm.

Any other material to compete with the foil-based materials must be cost-efficient regarding raw materials, have comparable food preserving properties, a reduced carbon footprint and have a comparably low complexity in the converting of materials into a finished packaging laminate.

Among the efforts of developing non-aluminium-foil materials for liquid food carton packaging, there is also a general incentive towards developing pre-manufactured films or sheets having high and multiple barrier functionalities, which may replace the aluminium-foil barrier material in the conventional laminated packaging material or combine several separate barrier layers in the laminated material and adapt it to conventional processes for lamination and manufacturing.

Such non-aluminium-foil, "non-foil", packaging laminates may be more sensitive to mechanical stress or strain. Aluminium-foil-based packages and materials may also need additional mechanical robustness, especially for distribution and handling under severe climate and infrastructure conditions, or in connection to packages or package shapes having more demanding geometries.

Examples of such alternative, more environmentally sustainable barrier materials are barrier-coated paper substrates obtained by aqueous dispersion coating and/ or vapour deposition coating onto thin paper carrier substrates. Barrier coatings applied as wet, aqueous dispersion coatings or as vapour deposited coatings are very thin, i.e. at the most a few microns thick and in the latter case rather at the scale of 2-digit values of nanometers. Obviously, such thin coatings are vulnerable to mechanical stress and strain and benefit from further protection by adjacent layers. Moreover, such thin barrier coatings, are not as reliable as a thick metal foil to prevent migration or penetration of other substances than oxygen. Accordingly, there is a need to complement such a barrier coating with more robust polymer layers on its inside in a laminated packaging material, i.e. in the direction towards the filled product in a packaging container made from the packaging material.

An earlier patent publication WO2011/003565A1 discloses a non-aluminium-foil laminated packaging material for liquid food carton packaging, which comprises a dispersion-coated and subsequently metallised paper substrate functioning as a barrier material as well as an induction susceptible material, thus replacing a traditional aluminium foil barrier. In addition to the bending-stiff paperboard bulk layer, the laminate thus has an additional "paper barrier" material.

The patent publications EP2257430A1 and US2011/278311A1 are examples of laminated packaging film for packaging of liquid food.

The earlier patent publication WO2017/089508A1 discloses how improved barrier properties may be obtained in a similar manner from a metallised paper in a similar carton-based packaging laminate, by selecting a paper substrate providing optimal properties. Such a metallised paper substrate provided not only improved barrier properties, but also indicated better stability of the metallised layer for induction heat sealing purposes.

Patent publication WO2011/088854A1 discloses a different laminated packaging material for liquid food packaging containers in the form of pouches. It is based on a thinner paper bulk layer which is laminated to an aluminium foil to provide e.g. gas barrier and light barrier properties. It further has outer layer of thermoplastic polymers, including a pre-manufactured polyethylene film in the inside polymer layer portion, to improve its mechanical robustness.

Although a great potential is seen in paper-based, barrier laminated packaging materials for replacing the aluminium-foil based packaging laminates for liquid and wet food carton packaging, e.g. regarding increasing the recyclability and environmental sustainability of materials used, there is a need to further improve such and similar laminated packaging materials, which have more delicate and sensitive barrier materials than the conventionally used, significantly thicker aluminium metal foil.

There is also a need to provide an improved laminated paper-based material for pouch packages and other demanding carton laminate package formats for liquid, semi-liquid and viscous food products, wherein the materials and the barrier metal foil is exposed to considerable stress and strain because they lack sufficient dimensional stability in comparison to conventional fold-formed, cuboid, liquid carton packages.

### Disclosure of the invention

It is, accordingly, an object to provide an improved laminated packaging material comprising bulk layer of paper or paperboard or other cellulose-based material and a layer of an oxygen barrier material, for the purpose of packaging of oxygen-sensitive liquid food products, such as liquid, semi-liquid or viscous food products.

It is a further object to provide a non-foil, laminated packaging material for liquid, semi-liquid and viscous food products, which instead of aluminium foil comprise thinner and more sensitive material coatings, while still requiring good gas and other barrier properties, as well as good mechanical robustness of packages made from the packaging material, without impairing their openability such that the packed food product may easily be accessed by a consumer.

It is a further object to provide such a paper- or paperboard-based laminated packaging material, relative to aluminium-foil based barrier materials, capable of providing good gas and water vapour barrier properties, as well as having an increased proportion of recyclable and renewable (i.e. plant-based) materials, for the purpose of manufacturing readily openable packages for long-term, aseptic storage of liquid food.

A further specific object is to provide an improved paper-based laminated packaging material for pouch packages, having good barrier properties and good integrity and heat seal strength, thus fulfilling the requirements of long-term storage of liquid foods at ambient conditions, yet openable for consumer use.

These objects are attainable according to the present invention by the laminated packaging material and by packaging containers made from the laminated packaging material, as defined in the appended claims.

### Summary of the invention

According to a first aspect of the invention, there is provided a laminated packaging material for packaging of liquid, semi-liquid or viscous food products, comprising a bulk layer of paper, paperboard or other cellulose-based material, a first outermost, liquid tight, heat sealable layer comprising a thermoplastic polymer, a barrier layer or barrier multilayer portion, comprising at least one gas barrier material and being arranged on the opposite, inner side of the bulk layer, and a second innermost liquid tight, heat sealable layer, on the inner side of the barrier layer or barrier multilayer portion, the second, innermost liquid tight, heat sealable layer being directed towards the inside of a packaging container to be formed from the packaging material, wherein the second innermost liquid tight, heat sealable layer is a pre-manufactured polyethylene film, being a cast and biaxially oriented film comprising from 60 to 100 % of linear-low density polyethylene, LLDPE, the pre-manufactured polyethylene film further having
- a total thickness from 15 to 25 µm,
- an Elastic Modulus of at least 400 MPa in the MD, and of at least 500 MPa in the CD, as measured by ASTM D 882-02 (2018) with an initial strain rate of 0.1 mm/(mm*min) at 10 mm/min crosshead rate,
- a tensile strength above 40 MPa, such as above 50 MPa, in the MD and above 100 in the CD, as measured by ASTM D638M-14 (2017) at 200 mm/min crosshead rate,
- an elongation at break below 350 % in the MD and below 100 % in the CD, as measured by ASTM D638M-14 (2017) at 200 mm/min crosshead rate,
- a seal initiation temperature, SIT, from 80 to 100 deg C as determined by ASTM F1921 (2018) at 2N,
- a maximum hot tack force above 7 N**,** as measured by ASTM F1921 (2018), and
- a puncture resistance of 10 N or higher, as measured according to ASTM F1306-16 (2016) and at a crosshead speed of 500 mm/min.

The pre-manufactured polyethylene film may have a core layer comprising more than 60 weight-% of m-LLDPE, a first "skin" layer on one side of the core layer, also comprising m-LLDPE and further adapted for heat sealing of the film, than the polyethylene polymers of the core layer, and optionally the pre-manufactured polyethylene film has a second skin layer on the other side of the core layer.

The laminated packaging material thus defined according to the present invention is especially well adapted for liquid carton packaging under severe circumstances, as when thin, delicate gas barrier coatings are to be relied on for oxygen barrier performance, instead of the traditional aluminium foil. It is also generally significantly improving package integrity and barrier performance, such that it particularly well fulfils the needs also of more demanding package formats. One example of such a more demanding package format are pouch containers for liquids, which lack the dimensional stability offered by a thicker paperboard bulk layer, i.e. comprising only a thin paper as the bulk or core layer, which has no, or very low, inherent bending stiffness properties. Another example of a demanding package format are packages holding a volume greater than 1 litre, such as 2-litre or half-gallon packages. Further demanding package formats may be fold-formed package shapes involving more severe folding points with more strain. Pouch containers and such big, or multi-folded, liquid-filled packages are naturally exposed to higher force and strain in handling and distribution, as the flowing food content or liquid moves independently of the package itself when transported, lifted, unloaded and carried.

The inclusion of pre-manufactured films into liquid carton packaging laminates is however known to entail problems with openability of the formed packaging containers, simply making the laminated material too strong from an openability point of view, be it with pre-cut laminated holes for drinking straws or with screw corks and other opening devices or with tear perforations and the like. In the laminated packaging material of the invention, the properties of package integrity and protection of sensitive barrier materials, as well as the openability of the packages, have been improved beyond expectations and not only optimised and balanced vs each other to provide an acceptable compromise. The consolidated improvement of these contradicting properties in liquid carton packaging containers, has brought progress and development of such laminated packaging materials a great step forward towards sustainable, yet durable packaging materials for aseptic and long-term packaging of liquid food.

The pre-manufactured polyethylene film may be laminated to the barrier layer or barrier multilayer portion by means of a second bonding layer of a thermoplastic polymer, to provide further improved mechanical robustness and protective properties to the complete laminated structure of the packaging material.

An example of the above described "non-foil" laminated packaging materials, with which thin, delicate gas barrier coatings are to be relied upon, is a material wherein the barrier multilayer portion comprises a paper substrate which has at least one coating of a gas barrier material applied onto it at from 2 to 5000 nm (5 µm). Such a non-foil laminated packaging material provides a more environmentally sustainable and recyclable packaging material.

Generally, the use of a barrier-coated paper substrate, instead of an aluminium foil, in such laminated materials and packages, provide for a greater proportion of fibre content, which is both of renewable, i.e. non-fossil origin, and possible to re-disperse and recycle to pulp, for further use of the old materials in the creation of new products, as required by a circular economy of fibre materials.

According to a second aspect of the invention, there is provided a method for manufacturing of the laminated packaging material of the first aspect, comprising the steps, in any order, of laminating a continuous web of a bulk layer of paper, paperboard or other cellulose-based material to the outer side of a continuous web of a barrier layer or barrier multilayer portion comprising at least one gas barrier material, laminating a continuous web of a pre-manufactured inside polyethylene film defined as in the first aspect, as a second innermost liquid tight, heat sealable layer, to the other, inner side of the web of the barrier layer or barrier multilayer portion, such as by melt extrusion lamination, with an interjacent, second bonding layer of a bonding polymer, and extrusion coating a first outermost, liquid tight, heat sealable layer on the outer side of the bulk layer.

According to a third aspect of the invention there is thus also provided a packaging container for packaging of liquid, semi-liquid or viscous food products, comprising the laminated packaging material of the first aspect. The packaging container is manufactured at least partly from the laminated packaging material, and according to a further embodiment it is in its entirety made of the laminated packaging material. The packaging container formed from the laminated packaging material may be partly sealed, filled with liquid or semi-liquid food and subsequently sealed, by sealing of the packaging material to itself, optionally in combination with a plastic opening or top part of the package.

### Detailed description

With the term "long-term storage", in connection with the present invention, it is meant that the packaging container should be able to preserve the qualities of the packed food product, i.e. nutritional value, hygienic safety and taste, at ambient conditions for at least 1 or 2 months, such as at least 3 months, preferably longer, such as 6 months, such as 12 months, or more.

The term "aseptic" in connection with a packaging material and packaging container refers to conditions where microorganisms are eliminated, in-activated or killed. Examples of microorganisms are bacteria and spores. Generally, an aseptic process is used when a product is aseptically packed in a packaging container. For the continued aseptic conditions during the shelf-life of the package, the package integrity properties are of course very important. For long-term shelf-life of a filled food product, it may furthermore be important that the package has barrier properties towards gases and vapours, such as towards oxygen gas, to keep its original taste and nutritional value, such as for example its vitamin C content, intact.

With the term "bulk layer" is normally meant the thickest layer or the layer containing the most material in a multilayer laminate, i.e. the layer which is contributing most to the mechanical properties and dimensional stability of the laminate and the structural stability of packaging containers folded from the laminate, such as a thick paper, paperboard or carton. It may also mean a layer providing a greater thickness distance in a sandwich structure, which further interacts with stabilising facing layers, which have a higher Young's modulus, on each side of the bulk layer, to achieve sufficient such mechanical properties, such as bending stiffness, for achieving structure stability of formed packaging containers.

The term LLDPE covers all linear low density polyetylenes, including "ZN-LLDPE" polymerised by means of Ziegler-Natta type catalysts as well as "m-LLDPE" polymerised by catalysts of so-called "constrained geometry", or "singe-site" catalysts, such as "metallocene" catalysts, and other linear low density polyethylenes.

The term "dispersion coating" herein relates to a coating technique in which an aqueous or substantially aqueous dispersion, suspension, emulsion or solution of a polymer is applied to the surface of a substrate layer, usually in the form of a continuous web, to form a solid, substantially non-porous film after drying. The term "dispersion" covers thus also any solution, suspension, emulsion or solution or mixes thereof, that would be capable of providing such a coating after drying. Polyvinyl alcohols (PVOH, PVAL) are typical polymers suitable for dispersion coating, but may for example at high saponification degrees in practice rather be polymer solutions, or mixes of dispersed and dissolved PVOH. A dispersion-coated barrier layer or coating is formed by a dispersion coating, also called "liquid-film coating", techniques. The aqueous dispersions may comprise fine polymer particles, and be a latex.

Grammages of papers were determined according to the official test method of ISO 536:2019 by the unit g/m², while thickness and density were determined according to ISO 534:2011, by the units µm (m) and kg/m³, respectively.

Thickness measurements of coated polymer layers on paper may be measured and estimated by taking sliced section samples of the structure and studying them in a SEM microscope. The slicing may be done using e.g. a cryo microtome.

With the term "package integrity", is generally meant the package tightness, i.e. the resistance to leakage or breakage of a packaging container. The term encompasses the resistance of the package to intrusion of microbes, such as bacteria, dirt, and other substances, that may deteriorate the filled food product and shorten the expected shelf-life of the package.

One main contribution to the integrity of a package from a laminated packaging material is provided by good internal adhesion between adjacent layers of the laminated material. Another contribution comes from the material resistance to defects, such as pinholes and the like within each material layer itself, and yet another contribution comes from the strength of the sealing joints, by which the material is sealed together at the formation of a packaging container. Regarding the laminated packaging material itself, the integrity property is mainly focused on the adhesion of the respective laminate layers to its adjacent layers and on the ability to withstand thermal- and mechanical loads e.g. during folding and sealing, without fracturing or substantial thinning of material thicknesses. Regarding the sealing of the packages, the integrity is mainly focussed on the quality of the sealing joints, which is ensured by well-functioning and robust sealing operations in the filling machines, which in turn is ensured by adequately adapted heat-sealing properties of the laminated packaging material.

The term "liquid or semi-liquid food" generally refers to food products having a flowing content that optionally may contain pieces of food. The term liquid food includes water. Dairy and milk, soy-, rice-, grain- and seed-based drinks, juice, nectar, still drinks, water, flavoured water, energy drinks, sport drinks, coffee or tea drinks, coconut water, wine, soups, jalapenos, tomatoes, sauce (such as pasta sauce) and olive oil are some non-limiting example of food products contemplated.

The laminated packaging material of the present invention thus comprises a bulk layer of paper or paperboard or other cellulose-based material and has a barrier layer or multilayer barrier portion laminated between the bulk layer and the second innermost liquid-tight, heat sealable layer, which is to be directed to the inside of a container formed from the laminated packaging material.

A suitable paper or paperboard bulk layer may have a thickness of from about 100 µm up to about 650 µm, and a surface weight approximately from 100 to 520 g/m², preferably from about 150 to about 300 g/m² and may be a conventional paper or paperboard of suitable packaging quality. The purpose of the bulk layer in the laminated packaging materials of the present invention is to provide dimensional stability, rigidity and stiffness to packaging containers, e.g. for use in wet and humid conditions and/or for storage of liquids and wet (heavy) food products. A suitable bending stiffness is 80 mN.

For low-cost aseptic, long-term packaging of liquid food, a thinner packaging laminate may be used, having a thinner paper core layer. The packaging containers made from such packaging laminates are not fold-formed but formed into pillow-shaped flexible pouches. A suitable paper for such pouch packages may have a surface weight of from about 50 to about 140 g/m², preferably from about 70 to about 120 g/m², more preferably from about 70 to about 110 g/m². Above 150 g/m², bending stiffness is typically too high for pouches.

The barrier layer or barrier multilayer portion may be laminated to the bulk layer by means of a first bonding layer of one or more polymers, such as thermoplastic polymers, such as polyolefins.

The barrier layer or multilayer barrier portion may thus be bonded to the bulk layer by an intermediate adhesive polymer or binder, or by a thermoplastic polymer as the first bonding layer. According to an embodiment the first bonding layer is a polyolefin layer, such as a layer of a polyethylene-based polyolefin homopolymer, copolymer or blend, including in the majority ethylene monomer units. The first bonding layer may bind the bulk layer to the barrier layer or multilayer barrier portion by melt extrusion laminating the first bonding polymer layer between a web of the bulk layer and a web of the barrier material(s), and simultaneously pressing the three materials together while being forwarded as a laminate web through a lamination roller nip, thus providing a laminated structure by extrusion lamination. Such melt extrusion lamination is suitable for most choices of barrier layers or multilayer barrier portions, such that sufficient adhesion between the bonded material layers is possible to obtain and retain.

In a further embodiment, wherein a multilayer barrier portion is a barrier-coated cellulose-based substrate, the thus paper- or cellulose-based barrier materials may be bonded to the bulk layer by wet application of an aqueous dispersion composition, comprising an adhesive polymer binder, onto one of the web surfaces to be laminated and pressing the two webs together while they are forwarded through a lamination roller nip, thus providing a laminated structure by wet lamination. The moisture of the aqueous adhesive composition is absorbed into the fibrous cellulose network of the two paper layers, and partly evaporating with time, during the subsequent lamination processes. There is thus no need for a forced drying step. The adhesive polymer binder may be selected from the group consisting of acrylic polymers and copolymers, starch, cellulose and polysaccharide derivatives, polymers and copolymers of vinyl acetate and vinyl alcohol. For best possible environmental and sustainability profile, adhesive binders originating from plant-based or non-fossil sources are in this case preferred as the first bonding layer.

In an embodiment, a barrier-coated paper substrate, may be laminated to the bulk layer by from 0.5 to 5 g/m² of an interjacent bonding composition comprising a binder selected from the group consisting of acrylic polymers and copolymers, starch, starch derivatives, cellulose derivatives, polymers and, copolymers of vinyl acetate, copolymers of vinyl alcohol, and copolymers of styrene-acrylic latex or styrene-butadiene latex. Such a low amount of an interjacent bonding composition is possible to apply by aqueous dispersion or solution coating of a polymer binder and is not possible to apply by extrusion coating or extrusion lamination of a polymer melt to achieve sufficient melt bonding. Since the surfaces of the layers to be bonded together are both made of cellulose, such wet lamination is made by the absorption of the aqueous medium into the respective cellulose layers, and thus the formation of a thin and dry bonding layer at the interface between the two layers.

Thus, lamination of the bulk layer to the barrier layer or multilayer barrier portion may be performed by wet applying an aqueous dispersion of an adhesive composition comprising an adhesive polymer binder onto the web of the bulk layer or onto the web of the barrier layer or multilayer barrier portion at an amount from 1 to 5 g/m² dry weight, and pressing the two webs together while they are forwarded through a lamination roller nip, without forced drying.

The outer- and innermost, liquid-tight layers of thermoplastic polymers, and the lamination layers in the interior of the laminate structure, do not normally add recognizable barrier properties to migrating gas molecules or small molecules. Their purpose is to provide a direct barrier to water or other liquids from penetrating through to the cellulose-based bulk material and other sensitive layers and to act as an aseptic barrier, maintaining package integrity to protect the filled contents inside the package. The liquid barrier layers also prevent water vapour from migrating to the cellulose to the extent that it gets wet, but they are not capable of keeping the moisture content of the laminated structure at zero or at the low level of "dry" paper (which is at about 7-8 % in an environment at ambient temperature, i.e. at 23 deg C, and 50 % relative humidity, RH). The moisture content in the laminated carton material of a packaging container filled with liquid is usually rather high and migration through the material occurs, unless there is a further water vapour barrier included, such as an aluminium foil, a vapour deposited metallisation layer, other vapour deposition coating, inorganic material layer or other polymer material layer.

Suitable thermoplastics for the outermost liquid-tight layer are polyolefins such as polyethylene and polypropylene homo- or co-polymers, preferably polyethylenes and more preferably polyethylenes selected from the group consisting of low density polyethylene (LDPE), linear LDPE (LLDPE), single site catalyst metallocene polyethylenes (m-LLDPE) and blends or copolymers thereof. According to an embodiment, the outermost liquid-tight layer is an LDPE.

The outermost, liquid-tight layer of a polymer may be applied to the bulk layer at from about 5 to 15 g/m², such as from 8 to 15 g/m².

The same thermoplastic polyolefin-based materials, suitable in the outermost layer, in particular polyethylenes, are also suitable in bonding layers interior of the laminated material, i.e. between a bulk or core layer, such as paper or paperboard, and a further barrier layer or multilayer barrier film or sheet. In an embodiment, the first bonding layer may be a more simple or conventional polyethylene layer, such as a low density polyethylene (LDPE) layer. In another embodiment, the interior bonding layer between the bulk layer and the barrier layer may have a configuration of three part-layers, of which the centre layer is a linear polyethylene and the side layers are LDPE. The three layers are thus coextrusion laminated between the bulk and the barrier layers, and the centre layer is preferably a metallocene-polymerised mLLDPE, while the side layers are of LDPE.

The pre-manufactured polyethylene film, constituting the second, innermost, liquid tight, heat sealable layer, may be laminated to the barrier layer or barrier multilayer portion by means of a second bonding layer of a thermoplastic polymer, such as a polyolefin, such as polyethylene or a polyethylene-based co- or graft copolymer with functional groups for adhesive bonding to adjacent layers in the laminate.

Suitable first and second bonding layers or additional tie layers in the interior of the laminated material, such as for example between the bulk or core layer and the barrier-coated paper substrate, or between the pre-manufactured polyethylene film and the barrier layer(s), may thus also be so-called adhesive thermoplastic polymers, such as adhesive polyolefins, which are based on LDPE or LLDPE co-polymers or, graft co-polymers with functional-group containing monomer units, such as carboxylic or glycidyl functional groups, e.g. (meth)acrylic acid monomers or maleic anhydride (MAH) monomers, (i.e. ethylene acrylic acid copolymer (EAA) or ethylene methacrylic acid copolymer (EMAA)), ethylene-glycidyl(meth)acrylate copolymer (EG(M)A) or MAH-grafted polyethylene (MAH-g-PE). Other examples of such adhesive polymers are so called ionomers or ionomer polymers. Preferably, the adhesive polyolefin is an ethylene acrylic acid copolymer (EAA) or an ethylene methacrylic acid copolymer (EMAA).

In an alternative embodiment, the pre-manufactured polyethylene film may be laminated to a barrier layer or multilayer barrier portion by means of so-called solvent-less lamination, employing very thin layers of curable adhesives. Examples of such curable adhesives may be based on compositions of polyether-, polyester-, acrylic- or polyurethane binders. They may be applied as primers on a polymer film or substrate to be laminated. Curing of the thus applied adhesive composition may be induced by various methods, such as moisture from the environment or by energy from heat or irradiation.

In an embodiment, the laminated packaging material comprises a paperboard bulk layer having a grammage from 100 to 520 g/m², such as from 150 to 300 g/m², and a barrier multilayer portion, wherein the barrier multilayer portion comprises a paper substrate which has at least one coating of a gas barrier material applied onto it at from 2 to 5000 nm (0.002 to 5 µm), to provide a more environmentally sustainable and recyclable packaging material.

In a further embodiment, combinable with the above-mentioned embodiments, the pre-manufactured polyethylene film is laminated to the barrier layer of multilayer barrier portion by means of melt extrusion lamination with an interjacent coextrusion film of an adhesive polymer directed towards the barrier layer and an LDPE polymer layer directed towards the pre-manufactured polyethylene film. Preferably, the thus melt coextruded, second bonding layer, consists of an ethylene acrylic acid, EAA, "tie" layer and a thicker LDPE layer. The EAA tie layer may for example be applied at an amount from 3 to 6 g/m², and the further LDPE bonding layer may be applied at from 10 to 20 g/m².

In a gas-barrier coated paper substrate, for a gas-barrier material in a laminated packaging material of the invention, the top-side surface of the thin paper substrate has at least one coating of at least one gas barrier material to a total coating thickness from 2 to 5000 nm (5 µm), such as from 2 to 4000 nm (4 µm). Such thin coatings will not produce reject or waste when the used laminated packaging materials comprising such coatings are recycled in conventional cellulose fibre recycling streams and they do not require much material in relation to the benefit that they provide.

The paper substrate is relatively thin, such as having a grammage from 30 to 75 g/m² and having suitable properties to carry thin gas barrier, and other barrier, coatings. A high smoothness of the top-side to be coated, i.e. a low surface roughness, is required for good barrier coating quality. This may be achieved by the paper itself, or by base coating and/or impregnating the paper substrate. Furthermore, a paper substrate may benefit from having a high density, such as 900 kg/m³ or higher.

The at least one gas-barrier coating may be formed by coating and subsequent drying of a dispersion or solution of an aqueous composition of at least one gas barrier material. The thus applied gas-barrier coating forms a continuous and uninterrupted layer of gas-barrier material onto the surface of the paper substrate. This may be facilitated by a paper substrate which is impregnated or base coated with an impregnating or base coating polymer material composition. The impregnated or base coated paper substrate may have a smoother and/or denser surface such that a subsequently applied gas-barrier coating may be applied at very low thickness but still with a high quality of the coating, to obtain an even surface and thickness as well as exhibiting homogeneity throughout its thickness and lateral extension of the continuous coating layer.

The top-side surface of the paper substrate may according to one embodiment be coated to a dry coating thickness from 100 to 5000 nm (from 0,1 to 5 µm), such as from 100 to 4000 nm (from 0,1 to 4 µm), such as from 300 to 3500 nm (from 0,3 to 3,5 µm), such as from 300 to 2500 nm (from 0,3 to 2,5 µm), with a gas barrier material comprising a polymer.

The gas barrier material may comprise a polymer selected from the group consisting of vinyl alcohol polymers or copolymers, such as polyvinyl alcohol, PVOH, or ethylene vinyl alcohol, EVOH, and polysaccharides or polysaccharide derivatives. Suitable polysaccharides or polysaccharide derivatives may be selected from the group consisting of starch, starch derivatives, chitosan, chitosan derivatives, cellulose, cellulose derivatives, and lignocellulose derivative compounds. In an embodiment, the polymer is of renewable (i.e. non-fossil based) origin.

In a more specific embodiment, the gas barrier material may comprise a polymer selected from the group consisting of vinyl alcohol polymers and copolymers, such as from the group consisting of polyvinyl alcohol, PVOH, and ethylene vinyl alcohol, EVOH, starch and starch derivatives, xylan, xylan derivatives, nanofibrillar cellulose /microfibrillar cellulose, NFC/ MFC, nanocrystalline cellulose, NNC, and blends of two or more thereof.

According to another embodiment, the gas barrier material may be a water-dispersible polyamide or polyester, or polyvinylidene chloride. Preferably, such water-dispersible polyamides, polyesters or polyvinylidene chloride are bio-based and/or are capable of providing oxygen gas barrier properties at only a very low amount of coating, i.e. a very thin coating, such as below 1 g/m² or below 1,5 µm, the object being to provide a gas barrier material which is recyclable in the cellulose-fibre recycling streams without leaving undesired amounts of waste material, i.e. so-called "reject".

Such thin coatings are obtained by dispersion or solution coating of a gas barrier material comprised in an aqueous gas barrier composition and subsequent drying and cannot be applied at the thin coating thicknesses by any alternative method, such as extrusion coating. Polymers and substances may be applied as solutions or dispersions in organic solvents other than water, but such methods are generally not relevant for the provision of environmentally sustainable packaging materials for the future.

In a preferred embodiment, a coating at from 0,5 to 3,5 g/m², such as from 1 to 3 g/m², of PVOH is applied on the top-side surface of the paper substrate.

Further, when the gas barrier material coating is formed by coating and subsequent drying a dispersion or solution of a gas barrier composition, it may further comprise a laminar compound, such as a nano-dimensional laminar clay, talcum or CaCO₃.

A polymer for impregnation or base-coating may be selected from starch, starch derivatives, carboxymethyl-cellulose, CMC, or other cellulose ethers, and be applied at an amount from 0.5 to 4 g/m², such as from 0.5 to 3 g/m², such as from 0.5 to 2 g/m², such as from 0.5 to 1.5 g/m², dry weight. The gas-barrier coating may be subsequently applied on top of the impregnated or base-coated, top side of the paper as a continuous, uninterrupted coating at a total thickness from 2 to 4000 nm (4 µm), such as from 2 to 3000 nm (3 µm).

The thus gas-barrier coated paper substrate may have on its top-side coated surface a further vapour deposition coating of a gas barrier material selected from metals, metal oxides, inorganic oxides and amorphous diamond-like carbon coatings. The vapour deposition coating may more specifically be selected from the group consisting of an aluminium metallisation coating and aluminium oxide, AlOx. Preferably it is an aluminium metallisation coating.

The coated paper substrate having a gas barrier material coating applied may thus be further and subsequently coated by a vapour deposition coating at a thickness of from 2 to 200 nm, such as from 2 to 150 nm, such as from 2 to 100 nm, such as from 5 to 80 nm, such as from 5 to 50 nm, such as from 2 to 45 nm.

A coated paper substrate may further be provided, wherein the backside of the paper substrate is also coated and/or impregnated with at least one coating of at least one gas barrier material as defined in any of the above embodiments.

The vapour deposited barrier coating to finally be coated onto the top-side surface of the paper substrate, is applied by means of physical vapour deposition (PVD) or chemical vapour deposition (CVD), for example by plasma enhanced chemical vapour deposition (PECVD).

Generally, below 5 nm the barrier properties may be too low to be useful and above 200 nm, such as above 100 nm, such as above 50 nm, depending on the type of vapour deposition coating, the barrier coating may be less flexible and, thus, more prone to cracking when applied onto a flexible substrate and would also cost more.

Other examples of vapour deposition coatings are aluminium oxide (AlOx, Al₂O₃) and silicon oxide (SiOx) coatings. Generally, PVD-coatings of such oxides may be less suitable for incorporation into packaging materials by lamination, while metallised layers as being made by PVD are highly suitable in flexible packaging laminates.

Normally, an aluminium metallised layer inherently has a thin surface portion consisting of an aluminium oxide due to the nature of the metallisation coating process used.

The purpose of a metallisation aluminium coating, or an aluminium oxide coating may be to add oxygen-barrier properties. The purpose may alternatively be to add primarily water vapour barrier properties for the purpose of protecting the oxygen barrier inherent to other, first applied coatings. Coatings applied as aqueous dispersions of gas barrier polymers and subsequent drying are often moisture sensitive, such that their oxygen barrier deteriorate with an increase of the moisture content in the laminate layers. A metallisation layer on top of such a moisture-sensitive coating efficiently protects the dispersion coated coating against moisture migrating from the wet or liquid food product inside of the packaging container. It is thus important that the metallisation coating fully covers the oxygen barrier coating beneath it and remains intact throughout lamination operations and folding and forming operations, such that the filled packages still have effective barrier properties against the migration of oxygen, as well as water vapour.

In an embodiment, such an aluminium metallised layer has been applied to an optical density (OD) of from 1.8 to 4, preferably from 1.9 to 3.5. At an optical density lower than 1.8, the barrier properties of the metallised film may be too low. At too high metal thickness, on the other hand, the metallisation layer may become brittle, and the thermostability during the metallisation process will be low due to higher heat load when metallising the substrate film during a longer time. The coating quality and adhesion may then be negatively affected. In an embodiment, regarding flexibility of the coated metallization coating and regarding coating operational efficiency, the metal deposition coating is applied to a thickness of from 10 to 200 nm, such as from 10 to 150 nm, such as from 10 to 100 nm, such as from 10 to 95 nm, such as from 10 to 80 nm, such as from 10 to 50 nm, which corresponds to less than 1 - 3 % of the aluminium metal material present in an aluminium foil of conventional thickness for packaging, such as 6-9 µm.

Other coatings may be applied by means of a plasma enhanced chemical vapour deposition method (PECVD), wherein a vapour of a compound is deposited onto the substrate under more or less oxidising circumstances. Silicon oxide coatings (SiOx) may, for example, also be applied by a PECVD process, and may then obtain very good barrier properties under certain coating conditions and gas recipes.

DLC defines a class of amorphous carbon material (diamond-like carbon) that displays some of the typical properties of diamond. Preferably, a hydrocarbon gas, such as e.g. acetylene or methane, is used as process gas in a plasma for producing a coating of amorphous hydrogenated carbon barrier layer applied by a PECVD vacuum process, i.e. a DLC. DLC coatings applied by PECVD under vacuum provide good adhesion to adjacent polymer or adhesive layers in a laminated packaging material. Particularly good adhesion to adjacent polymer layers, are obtained with polyolefins and in particular polyethylene and polyethylene-based co-polymers.

Further coating layers for the common purpose of improving the oxygen barrier of the barrier-coated paper may be applied, such as further top coatings or base coatings for the vapour deposition coating.

The total applied thickness of the continuously and uninterruptedly covering gas-barrier coatings may be up to 5 µm, such as 4 µm, such as 3,5 µm.

In a different embodiment, the laminated packaging material may comprise a bulk layer being a paper core layer having a grammage from 70 to 140 g/m², such as from 70 to 120 g/m², such as from 70 to 110 g/m², and a barrier layer of an aluminium foil, for the purpose of manufacturing of pouch packages.

In demanding package formats as pouch packages or unusually big packaging container volumes, also a barrier layer of a traditional aluminium foil may need the further support from a pre-manufactured polyethylene film as the innermost, liquid tight and heat sealable layer.

Further alternative, sensitive barrier layers and materials may be polymer-based barrier materials such polyamides and melt extrusion grades of vinyl alcohol copolymers, such as ethylene vinyl alcohols, EVOH. Such polymer barrier materials may be applied by melt extrusion as thicker barrier layers, but they are still sensitive to folding strain and deterioration due to heat sealing operations and the like. Accordingly, also in laminated packaging materials comprising simply a single barrier layer of a polyamide or an EVOH, the specific pre-manufactured polyethylene film as the innermost, liquid tight and heat sealable layer will improve the properties of the laminated packaging material significantly, in all respects of package integrity and openability.

It has up to now been difficult to keep the balance between package integrity and openability in the mentioned demanding packaging materials and containers, and cumbersome solutions regarding materials in connection to opening holes and perforations were developed, such as pre-cuts and perforations in single layers or other pre-treatments of material layers, for the purpose of achieving sufficient openability. Such difficulties were always pronounced in connection to the use of bioriented polymer film substrates for the stable carrying of thin vapour deposited gas barrier coatings, and thus the inclusion of further, or non-barrier related such bi-oriented pre-manufactured films in the laminated materials was hitherto not well considered. Since many years, only blown films pre-manufactured by film-blowing processes were considered for the innermost layer or for the inside polymer layer portion of the laminated materials. By the specific choice of film for the inventive laminated packaging material, great progress has thus been made from several points of view, including also openability.

A pre-manufactured polyethylene film suitable as the innermost layer for the laminated packaging material should thus be cast instead of blown, comprising from 60 to 100 weight % of linear-low density polyethylene, LLDPE, such as m-LLDPE, and be biaxially oriented such that it has
- a total thickness from 15 to 25 µm,
- an Elastic Modulus of at least 400 MPa in the MD, and of at least 500 MPa in the CD, as measured by ASTM D 882-02 (2018) with an initial strain rate of 0.1 mm/(mm*min),
- a tensile strength above 40 MPa, such as above 50 MPa, in the MD and above 100 in the CD, as measured by ASTM D638M-14 (2017) at 200 mm/min crosshead rate,
- an elongation at break below 350 % in the MD and below 100 % in the CD, as measured by ASTM D638M-14 (2017) at 200 mm/min crosshead rate,
- a seal initiation temperature, SIT, from 80 to 100 deg C as determined by ASTM F1921 (2018) at 2N,
- a maximum hot tack force above 7 N, as measured by ASTM F1921 (2018), and
- a puncture resistance of 10 N or higher, as measured according to ASTM F1306-16 (2016) at a crosshead speed of 500 mm/min.

Preferably, the pre-manufactured polyethylene film has a core layer comprising more than 60 weight-% of m-LLDPE, a first "skin" layer on one side of the core layer, also comprising m-LLDPE and being further adapted for heat sealing of the film than the polyethylenes of the core layer, and optionally the pre-manufactured polyethylene film has a second skin layer on the other side of the core layer. The LLDPE of the heat sealable skin layer may be further adapted for improving the heat sealability of the film by having a higher melt flow rate (i.e. melt index) and a lower density than the LLDPE of the core layer.

The major LLDPE polymer of the pre-manufactured polyethylene film may thus be a linear low density polyethylene manufactured by metallocene-type of catalyst polymerization technology (constrained-geometry, single-site), m-LLDPE. Whilst m-LLDPE is preferred for use in the core layer, other layers such as the skin layers may suitably comprise Ziegler-Natta LLDPE.

The pre-manufactured polyethylene film is polyethylene-based film, but may contain minor amounts of additional polyolefin compounds, such as copolymers of ethylene and propylene for adjustment of various film properties.

The LLDPE of a cast film, such as of the core layer of a cast film, may have a melt flow ratio/ melt flow index (MFR/ MFI) of from 2 to 5 g/10min at 2.16 kg, 190 °C, as measured according to ASTM D1238 or ISO 1133. The major LLDPE base for a blown film, on the other hand, has a melt flow ratio of 1 or lower, to fulfil requirements for a film blowing manufacturing process. This seems to make a big difference in properties for suitability as a polymer in a pre-manufactured, heat-sealable film for the innermost layer, thus rendering cast, bi-axially oriented films more suitable for such heat sealable films. This may also be reflected by the fact that blown films normally require that further extrusion-coated polyethylene layers are applied innermost, i.e. on the inside of a blown film, to be heat sealed and to be in contact with a filled food product.

Examples of suitable LLDPE for the core layer are those with melting indices of 1 to 4 g/10 min (measured at 190 °C and 2.13 kg conditions), densities from 0.915 or lower to 0.930 g/cm³ , and melting peaks within a range from of 90 to 138° C.

The LLDPE of the first (sealant-side) skin layer and tie layer may have a higher melt index and a lower density than the LLDPE of the core layer and/or the optional second skin layer and tie layers, in order to enhance the heat-sealing properties of the sealant side layers and to avoid visual distortions and rheological defects caused by the sealing.

By further adapting the heat sealable skin to further preserve and provide the film to exhibit a low seal initiation temperature and a high hot-tack force, the sealability of the film may be optimised. Because the film blowing process and type of polymers used therefor, result in film layers varying to quite some extent in thickness within the plane extension of the film, blown films need to be made rather thick for sufficient and reliant heat sealability properties. Since the conformity of film thickness is better in bioriented cast films, such a film, including the heat sealable skin layer, may also be made thinner, such as by increased orientation of the layers of the film. Thus, the heat sealable portion or layer of the film only needs to be a thin, so-called "skin" layer of a thickness from 0.5 to 3 µm, such as from 1 to 3 µm, and the total thickness of the film may be as low as from 16 to 20 µm.

Preferably, the pre-manufactured polyethylene film has a stretching ratio from 5 to 7 in the machine direction, MD, and from 7 to 10 from in the cross direction, CD. The degree of orientation, i.e. stretching of the polymers in the film is thus very high, in comparison to blown films in particular, but also in comparison to many cast, biaxially oriented films, and unusually high in the CD vs the degree of orientation in the MD. Such degrees of stretching are attainable in a tenter-frame equipment. The high degree of stretching is reflected in the properties of the film, e.g. by the significantly higher tensile strength and the lower elongation at break in the CD. Such films may also be produced, for example, on a bi-orientation line, such as that described in United States Patent No. 8080294.

Preferably, the pre-manufactured polyethylene film has a total thickness from 16 to 23 µm, such as from 16 to 20 µm. It is important to the openability of a laminated packaging material that the bi-oriented film is not too thick while it still can provide good mechanical properties, as listed above.

In an embodiment, the core layer of the pre-manufactured polyethylene film has a thickness from 10 to 18 µm, such as from 10 to 16 µm, such as from 10 to 14 µm.

Preferably, the core layer comprises from 80 to 100 weight-% of LLDPE polymer, such as m-LLDPE, more preferably from 90 to 100 weight-%, such as above 90 weight-% LLDPE, such as preferably m-LLDPE.

In a further embodiment, the thickness of the first skin layer, and of the optional second skin layer, is from 0.5 to 3, such as from 1 to 3, such as from 2 to 3 µm. Preferably, the film has one skin layer on each side of the core layer, for optimal stability and mechanical symmetry of the film, thus avoiding phenomena such as curling of the film etc. The polymer of the optional skin layer need not be especially adapted for any property but should preferably match the mechanical properties and the melt processability properties of the core and the heat sealable skin layer. It may comprise an LDPE polymer, and optionally LLDPE polymer(s) of the same or different kind as comprised in the core layer. The surface of the optional skin layer may be adapted or treated to optimise adhesive or frictional properties, for example.

The pre-manufactured polyethylene film may comprise further thin layers to tighter bond the skin layer(s) to the core layer, so-called tie layers, of the same or different types of polymers as used in the core layer. The thickness of the tie layer is typically in the range of 0.50 to 25 µm.

The pre-manufactured polyethylene film may further comprise additives or other polymer compounds, such as anti-block agents (e.g. zeolite or silicate) and anti-slip agents (e.g. erucamide, silicone gum or PMMA) and hydrocarbon resins to further improve film qualities and processability. The sealant-side skin layer may comprise a greater concentration of anti-block agents than other layers.

In a different embodiment, the optional second skin layer may comprise an adhesive polymer, such as an ethylene-based polymer having functional carboxylic groups, such as a copolymer of ethylene with (meth)acrylic acid or the like, for improved adhesion and bonding to an adjacent, subsequently laminated or coated layer. With such a film, heat-pressure lamination to a metal foil layer may be possible, without applying any bonding material between the surfaces of the skin layer and the metal layer.

In an embodiment, the pre-manufactured polyethylene film has a seal initiation temperature, SIT, from 80 to 95 deg C, such as from 80 to 90 deg C, as determined by ASTM F1921 (2018) at 2N. This is at least partly achieved by an adapted, heat sealable skin layer, directed towards the inside of a packaging container made from the laminated packaging material, intended to be in contact with the filled product. The heat sealable skin layer comprises a polymer providing the important heat sealability properties of a high hot tack force and a low seal initiation temperature, attributable for example to m-LLDPE types of polyethylene.

In a further embodiment, the pre-manufactured polyethylene film has a maximum hot-tack seal strength, above 8 N, as measured by ASTM F1921 (2018). The combination of a low seal initiation temperature and a high maximum hot tack force at low temperature ensures a rapid and immediate sealing operation, allowing for fast filling machines and reliable seal strength in the filled packaging containers.

In yet a further embodiment, the pre-manufactured polyethylene film has a puncture resistance of 10 N or higher, as measured according to ASTM F1306-16 (2016) at a crosshead speed of 500 mm/min, and exhibits an elongation at puncture (i.e. at maximum load) lower than 10 mm. This property is important for the ability of the film to withstand penetration and rupture of the film by rapid impact of a protrusion onto the surface, i.e. the resistance of the film to "pointed impact". This may be a useful property in filled packages that are relying on a paper-based oxygen barrier material or other less flexible materials, or in packages subject to sudden impact or forces. The high puncture resistance value of 10 N or higher ensures that such impact or force needs to be quite high before any damage to the film would occur.

Suitable pre-manufactured films are disclosed in US2018/361722A of Jindal Films Americas LLC. A preferred pre-manufactured polyethylene film is SealTOUGH 18XE400, manufactured by Jindal Films. Minor adjustments to amounts of additives may be made e.g. for food safety.

The measurements of E-modulus were performed with a sample specimen length of 100 mm. The strain rate was adjusted to this specimen length by using a grip separation speed of 10 mm/min, as according to ASTM D 882-18. Accordingly, the initial strain rate was 0.1 mm/(mm*min).

Thickness measurements were performed in accordance with ASTM E252-06.

The tensile strength was measured according to ASTM D638M-14 (2017) at a 200 mm/min crosshead rate.

The elongation at break was measured by ASTM D638M-14 (2017) at 200 mm/min crosshead rate.

The seal initiation temperature, SIT, from 80 to 100 deg C was determined by ASTM F1921 (2018) at 2N.

The maximum hot tack force was measured by ASTM F1921 (2018).

The puncture resistance was measured according to ASTM F1306-16 (2016) at a crosshead speed of 500 mm/min.

### Examples and description of preferred embodiments

In the following, preferred embodiments of the invention will be described with reference to the drawings, of which:
Fig. 1 shows schematically, in cross-section, an embodiment of a laminated packaging material according to the invention,
Fig. 2 shows a further embodiment of a laminated packaging material according to the invention,
Fig. 3a shows schematically a method, for dispersion coating an aqueous barrier composition onto a paper substrate,
Fig. 3b shows schematically a method for laminating two webs together by melt extrusion lamination,
Fig. 3c shows schematically a method, for melt (co-) extrusion coating layer(s) of a thermoplastic heat sealable and liquid-tight polymer onto a web substrate, to form innermost and outermost layers of a packaging laminate of the invention,
Fig. 4 is showing a diagrammatic view of a plant for physical vapour deposition (PVD) coating, by using a solid metal evaporation piece, onto a paper substrate or film,
Fig. 5a, 5b, 5c and 5d are showing typical examples of packaging containers produced from the laminated packaging material according to the invention,
Fig.6 is showing the principle of how packaging containers as shown in Fig. 5a and 5b are manufactured from the packaging laminate in a continuous, roll-fed, form-fill- and seal process,
Fig. 7 is a diagram which shows how the package integrity of paper pouch packages is improved to withstand transport and rough handling by a laminated material of the invention,
Fig. 8a, 8b and 8c show schematic diagrams plotting the force versus deformation during the opening of a packaging container to drink from by a drinking straw, of a laminated packaging material of the invention as well as of a comparative laminated packaging material,
Fig. 9a and 9b show further diagrams related to the total energy required for the opening of a packaging container to drink from by a drinking straw, of a laminated packaging material of the invention as well as of a comparative laminated packaging material, and
Fig. 10a and 10b show diagrams related to the reduced tearing strength of the laminated packaging materials of the invention.

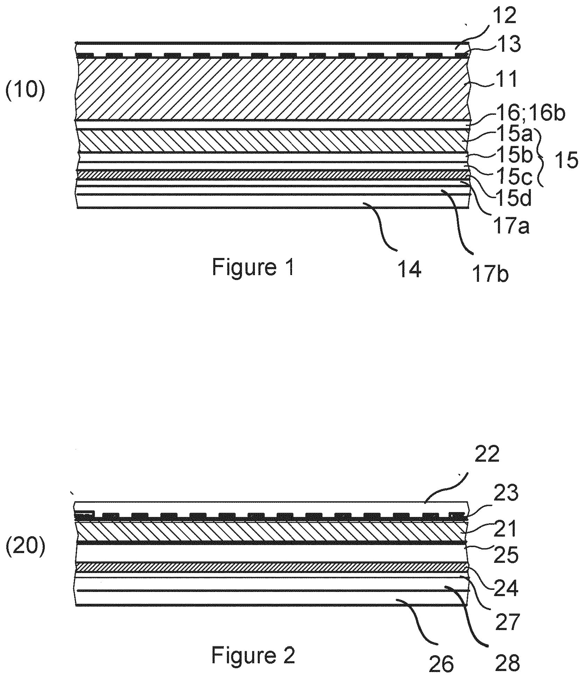

In Fig. 1, a cross-section of an embodiment of a laminated packaging material 10 for liquid carton packaging is shown, in which the laminated material comprises a paperboard bulk layer 11 of paperboard, having a bending force of 80 mN and a grammage weight of about 200 g/m², and further comprising an outermost transparent, protective layer 12, in this case a liquid tight and heat sealable layer of polyolefin applied on the outside of the bulk layer 11, which side is to be directed towards the outside of a packaging container produced from the packaging laminate. The layer 12 is transparent to show the printed décor pattern 13, applied onto the bulk layer of paper or paperboard, to the outside, thus informing about the contents of the package, the packaging brand and other information targeting consumers in retail facilities and food shops. The polyolefin of the outer layer 12 is a conventional low density polyethylene (LDPE) of a heat sealable quality, but may also include further similar polymers, such as linear and/or higher density polyethylenes, such as LLDPE or HDPE or MDPE. An LDPE layer is applied at an amount of about 12 g/m².

An innermost liquid tight and heat sealable pre-manufactured polyethylene film 14 is arranged on the opposite side of the bulk layer 11, which is to be directed towards the inside of a packaging container produced from the packaging laminate, i.e. the film 14 will be in direct contact with the packaged product. The pre-manufactured polyethylene film 14, is to form strong transversal heat seals of a liquid packaging container made from the laminated packaging material and comprises a biaxially oriented film comprising LLDPE to a major extent. It is 18 µm thick and exhibits the mechanical properties of the film in Table 1 and fulfils the requirements of claim 1.

The bulk layer 11 is laminated to a barrier-coated paper substrate 15, by an intermediate bonding layer 16 of a low density polyethylene (LDPE). The intermediate bonding layer 16 is formed by means of melt extruding it as a thin polymer melt curtain between the two paper webs and thus laminating the bulk layer and the barrier-coated paper substrate to each other, as all three layers pass through a cooled press roller nip. The grammage of the intermediate bonding layer 16 is from 12 to 20 g/m², such as from 14-16 g/m². The intermediate bonding layer may comprise one single LDPE polymer, or two or more part-layers of different polyethylenes to tailor the adhesion between the bulk and the barrier layers. In a preferred embodiment, the intermediate bonding layer 16 consists of three part-layers, with a middle layer of a metallocene-polymerised linear low density polyethylene, mLLDPE, and adjacent layers of LDPE. The grammage of each of the three layers is about 5 g/m². Thus, the LDPE layers are directly adjacent and bonding to the bulk layer 11 and to the paper barrier 15, respectively.

The paper barrier comprises a thin paper substrate 15a having a grammage of about 40 g/m². It may be base coated or impregnated 15a with a polymer composition to provide a smooth and/or dense surface on the paper substrate, to enhance the quality of subsequently applied gas barrier coatings. The paper substrate has in this case merely been coated with two coatings 15a,15b of PVOH, however. The PVOH, which is a polymer having high gas barrier properties, is applied by means of aqueous dispersion coating and subsequent drying of each of the two layers to a dry grammage of 1.5 g/m², i.e. providing a total amount of about 3 g/m² of PVOH. The gas barrier coatings 15a and 15b are further and subsequently coated with a metallisation layer 15c, both for providing the paper barrier with protection of the polymer gas barrier coating and for providing the paper barrier with water vapour barrier properties in addition to some further oxygen barrier properties. The metallisation coating 15d is applied to an optical density of about 2. The paper barrier 15 is pre-manufactured before being laminated into the full laminated packaging material, i.e. laminated by melt extrusion lamination of the intermediate bonding layers 16 to the bulk layer 11 as a pre-made barrier unit 15.

The innermost biaxially oriented, heat sealable film 14 is well adhered to the surface of the metallised barrier deposition coating 15d by an intermediate coextruded tie or adhesive polymer layer 17a, e.g. of ethylene acrylic acid copolymer (EAA), which is co-extruded together with a further inside, major bonding layer 17b of an extrusion grade polyethylene, such as LDPE. This configuration of the inside polymer layers provides a strong and robust protection of the sensitive paper barrier 15. The tie and bonding layers 17a and 17b may be applied at from 5 to 7 g/m² and at from 5 to 20 g/m², respectively, depending on size and type of the packaging container to be produced. In this embodiment, the inside bonding layers were applied at 6 and 13 g/m², respectively.

Alternatively, the bulk layer 11 may be laminated to the barrier-coated paper substrate 15 by means of wet lamination with an intermediate bonding layer 16b of a thin layer of adhesive polymer, obtained by applying an aqueous dispersion of for example PVOH, starch or a polyvinyl acetate adhesive onto one of the surfaces to be adhered to each other and subsequently pressing together in a roller nip. Thanks to the absorbing bulk layer of a comparatively thick cellulose structure, this lamination step may be performed in an efficient cold or ambient lamination step at industrial speed without energy-consuming drying operations, which normally are needed to accelerate the evaporation of water. The dry amount applied of the intermediate bonding layer 16b is of a few g/m² only, such as from 2 to 6 g/m², such that there is no need for drying and evaporation.

Thus, the amount of thermoplastic polymer can be significantly reduced in this lamination layer, in comparison to the conventional melt extrusion laminated bonding layer of polyethylene 16.

In Fig. 2 is shown a different embodiment of a laminated packaging material 20 of the invention, for liquid paper pouch packaging, in which the laminated material comprises a paper core layer 21, having a bending force of 0 mN and a grammage weight of about 72 g/m², and further comprising an outer liquid tight and heat sealable layer 22 of polyolefin applied on the outside of the bulk layer 21, which side is to be directed towards the outside of a packaging container produced from the packaging laminate. The polyolefin of the outer layer 22 is a conventional low density polyethylene (LDPE) of a heat sealable quality and has been applied at an amount of 12 g/m². The layer 22 is transparent to show the printed décor pattern 23, applied onto the bulk layer of paper 21.

The paper core layer 21 is further laminated to an aluminium foil constituting a barrier layer 24, which provides various barrier properties to the packaging laminate, above all oxygen and light barrier properties. The barrier layer 24 is bonded to the paper core layer 21 by a thermoplastic polymer bonding layer 25, by means of melt extrusion lamination of the thermoplastic polymer. The thermoplastic polymer of the intermediate bonding layer 25 is LDPE and it is applied as a single layer at an amount of 15 g/m2.

An innermost liquid tight and heat sealable layer 26, being a pre-manufactured polyethylene film, is arranged on the opposite side of the barrier layer 24, which is to be directed towards the inside of a packaging container produced from the packaging laminate. Thus, the film 26 will be in direct contact with the packaged product. The pre-manufactured polyethylene film 26, is the same as the biaxially oriented film 14 in the packaging laminate 10 in Figure 1, comprising a major proportion of LLDPE. The biaxially oriented film 26 is well adhered to the surface of the aluminium barrier foil 24 by an intermediate coextruded tie or adhesive polymer layer 27, e.g. of ethylene acrylic acid copolymer (EAA), which is co-extruded together with a further inside, major bonding layer 28 of LDPE. This configuration of the inside polymer layers provides a strong and robust protection of the aluminium foil as well as improved integrity of filled and heat sealed pouch packages. The tie and bonding layers 27 and 28 may be applied at from 5 to 7 and from about 5 to 20 g/m², respectively, depending on size and type of the pouch container to be produced. In this embodiment, the inside bonding layers were applied at 6 and 13 g/m2, respectively.

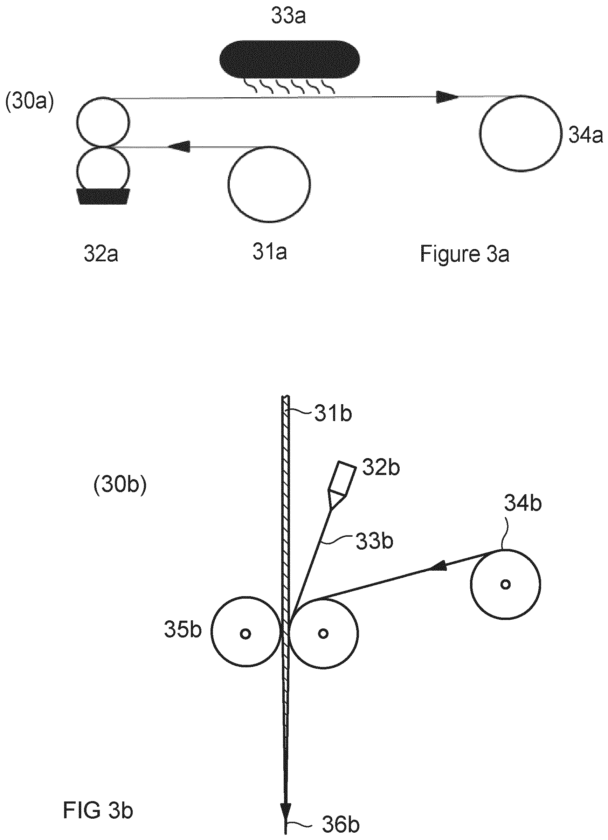

In Fig. 3a, a process of aqueous dispersion coating 30a is shown, which may be used for applying a gas barrier coating 12 from an aqueous gas barrier composition onto a substrate, or an aqueous adhesive composition for wet laminating two webs together, of which at least one web has a fibrous cellulose surface. The paper substrate web 31a (e.g. the paper substrate 15a in Figure 1) is forwarded to the dispersion coating station 32a, where the aqueous dispersion composition is applied by means of rollers onto the top-side surface of the substrate. The aqueous composition has an aqueous content of from 80 to 99 weight-%, and there will be a lot of water on the wet coated substrate that needs to be dried by heat, and evaporated off, to form a continuous coating, which is homogenous and has an even quality with respect to barrier properties and surface properties, i.e. evenness and wettability. The drying is carried out by a hot air dryer 33a, which also allows the moisture to evaporate and be removed from the surface of the paper substrate. The substrate temperature as it travels through the dryer, is kept constant at a temperature of from 60 to 80 °C. Alternatively, drying may be partly assisted by irradiation heat from infrared IR-lamps, in combination with hot air convection drying.

The resulting barrier-coated paper substrate web 34a is forwarded to cool off and is wound onto a reel for intermediate storage and later further vapour deposition coating of a barrier deposition coating onto the paper substrate 34a.

Figure 3b shows a method for melt extrusion laminating two webs together, such as a barrier material 31b for example formed by the method 30a in Figure 3a, or an aluminium foil barrier 24, as shown in Figure 2, and a bulk paperboard or paper layer 34b; 11; 21. Thus, the two webs are unwound and forwarded from intermediate storage reels not shown, and joined to each other in a lamination roller nip 35b, while a hot melt curtain of a bonding layer thermoplastic polymer 33b is extruded via a feedblock and die 32b in between the two webs to be joined. The melt curtain solidifies as it gains contact with the two cold webs and is pressed together into a laminated sandwich between the webs. One roller of the nip acts as a press roller, while the anvil roller may be a water-cooled steel roller, which thus supports the rapid solidification of the melt curtain polymer into a thick and stable bonding layer, binding the laminated layers of the material 36b together.

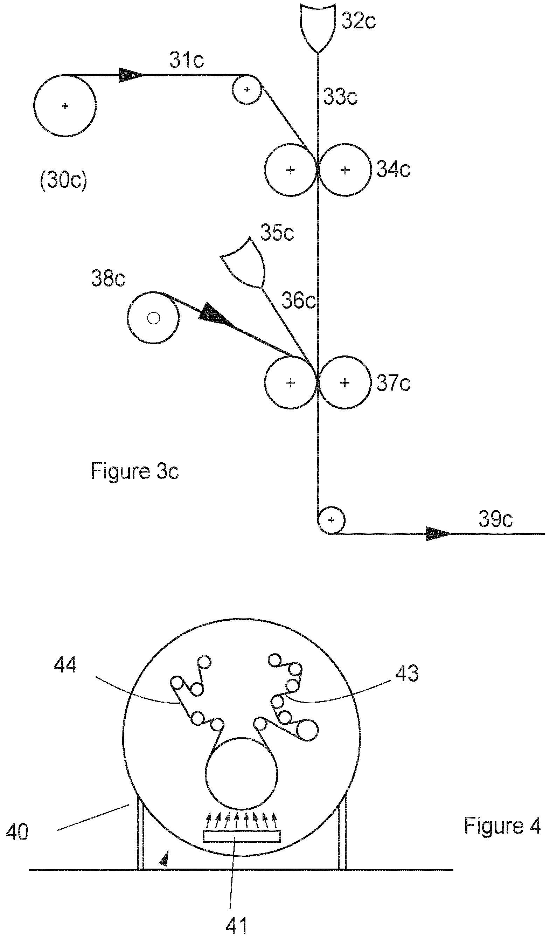

Fig. 3c shows a process (30c) for the final lamination steps in the manufacturing of a laminated packaging material, such as 10 or 20, of Fig. 1 and 2, respectively, after that the bulk layer 11, 21 first has been laminated to a barrier layer 15, 24. The bulk layer paperboard may have been laminated to the barrier-coated paper substrate by means of wet, cold dispersion adhesive lamination, or by means of melt extrusion lamination, as described above.

The resulting paper pre-laminate web 31c, 36b is forwarded from an intermediate storage reel, or directly from the lamination station for laminating the paper pre-laminate. The non-laminated side of the bulk layer 11; 21, i.e. its print side, is joined at a cooled roller nip 63 to a molten polymer curtain 33c of the LDPE, which is to form the outermost layer 12; 22 of the laminated material, the LDPE being extruded from an extruder feedblock and die 32c.

Subsequently, the paper pre-laminated web, now having the outermost layer 12; 22 coated on its printed side, i.e. the outside, passes a second extruder feedblock and die 35c and a lamination nip 37c, where a molten polymer curtain 36c is joined and coated onto the other side of the pre-laminate, i.e. on the barrier-coated side of the paper substrate, at the same time as it is laminating the pre-manufactured polyethylene film 38c to the inside of the barrier layer 15, 24. Thus, the innermost heat sealable biaxially oriented film 14; 26 is (co)extrusion laminated to the inner side of the bulk-barrier pre-laminate web 31c, to form the finished laminated packaging material 39c, which is finally wound onto a storage reel, not shown.

These two coextrusion steps at lamination roller nips 34c and 37c, may alternatively be performed as two consecutive steps in the opposite order.

Fig. 4 is a diagrammatic view of an example of a plant 40 for physical vapour deposition, PVD, of e.g. an aluminium metal coating or an aluminium oxide coating, onto a web substrate of the invention. The coated or uncoated paper substrate 43 is subjected, on its pre-coated side, to continuous evaporation deposition 41, of vaporised aluminium, to form a metallised layer of aluminium or, alternatively to a mixture of oxygen with aluminium vapour, to form a deposited barrier coating of aluminium oxide. The coating is provided at a thickness from 5 to 200 nm, such as from 5 to 100 nm, such as from 10 to 50 nm, so that a barrier-coated paper substrate 44 of the invention is formed. The aluminium vapour may be formed from ion bombardment of an evaporation source of a solid piece of aluminium at 41. For the coating of aluminium oxide, also some oxygen gas may be injected into the plasma chamber via inlet ports.

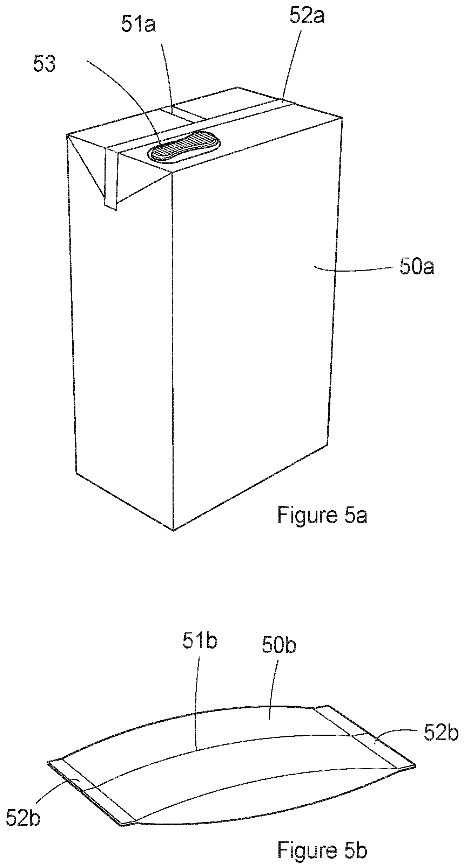

Fig. 5a shows an embodiment of a packaging container 50a produced from a packaging laminate according to the invention. The packaging container is particularly suitable for beverages, sauces, soups or the like. Typically, such a package has a volume of about 100 to 1000 ml. It may be of any configuration, but is preferably brick-shaped, having longitudinal and transversal seals 51a and 52a, respectively, and optionally an opening device 53. In another embodiment, not shown, the packaging container may be shaped as a wedge. In order to obtain such a "wedge-shape", only the bottom part of the package is fold formed such that the transversal heat seal of the bottom is hidden under the triangular corner flaps, which are folded and sealed against the bottom of the package. The top section transversal seal is left unfolded. In this way the merely partly folded packaging container is still easy to handle and dimensionally stable enough to put on a shelf in the food store or on any flat surface.

Fig. 5b shows an alternative example of a packaging container 50b produced from an alternative packaging laminate according to the invention. The alternative packaging laminate is thinner than for the packages of the type shown in Fig. 5a by having a thinner paper bulk layer, and thus the not sufficiently bending stiff carton to form a dimensionally stable parallelepipedal or wedge-shaped packaging container. It is not fold formed after transversal sealing 52b, and is thus not provided with crease lines. The packaging container will remain a pillow-shaped pouch-like container after the transversal sealing and will be distributed and sold in this form.

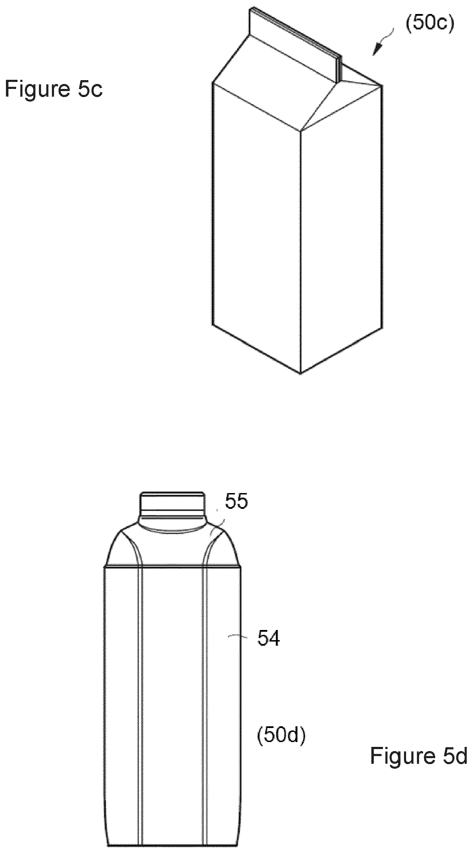

Fig. 5c shows a gable top package 50c, which is fold-formed from a pre-cut sheet or blank, from the laminated packaging material comprising a bulk layer of paperboard and the barrier-coated paper substrate of the invention. Also flat top packages may be formed from similar blanks of material.

Fig. 5d shows a bottle-like package 50d, which is a combination of a sleeve 54 formed from a pre-cut blanks of the laminated packaging material of the invention, and a top 55, which is formed by injection moulding plastics in combination with an opening device such as a screw cork or the like. This type of packages are for example marketed under the trade names of Tetra Top^{®} and Tetra Evero^{®}. Such packages are formed by attaching the moulded top 55 with an opening device attached in a closed position, to a tubular sleeve 54 of the laminated packaging material, sterilizing the thus formed bottle-top capsule, filling it with the food product and finally fold-forming the bottom of the package and sealing it.

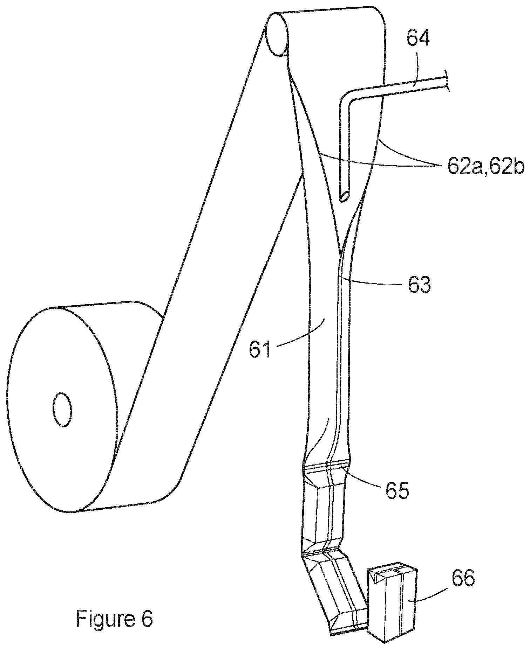

Fig. 6 shows the principle as described in the introduction of the present application, i.e. a web of packaging material is formed into a tube 61 by overlapping the longitudinal edges 62a, 62b of the web and heat sealing them to one another, to thus form an overlap joint 63. The tube is continuously filled 64 with the liquid food product to be filled and is divided into individual, filled packages by repeated, double transversal seals 65 of the tube at a pre-determined distance from one another below the level of the filled contents in the tube. The packages 66 are separated by cutting between the double transversal seals (top seal and bottom seal) and are finally shaped into the desired geometric configuration by fold formation along prepared crease lines in the material. Corresponding pouch containers may be produced by the same principle, however omitting the final folding steps after the separation of the tube into individual pouch packages.

The invention is not limited by the embodiments shown and described above but may be varied within the scope of the claims. Furthermore, it should be noted that the physical proportions of objects and items shown by the merely illustrative drawings are not necessarily reflecting true proportions of such objects and items in real life.

### Examples

**Table 1: Properties of pre-manufactured polyethylene films**

| Film sample ID / Film properties | | BO-F | A | B |
|---|---|---|---|---|
| Elastic Modulus (MPa), at 10 mm/min crosshead rate | MD | 494 | 341 | 247 |
| | CD | 539 | 579 | 358 |
| Tensile strength (Stress at break) (MPa), at 200 mm/min crosshead rate | MD | 52 | 49 | 36 |
| | CD | 129 | 38 | 32 |
| Elongation at break (Strain at break) (%) at 200 mm/min crosshead rate | MD | 291 | 418 | 379 |
| | CD | 67 | 760 | 715 |
| Seal initiation temp., SIT, (°C) at 2 N | | 90 | 105-110 | 100 |
| Maximum Hot Tack force (N) | | 8.6 | 6 | 4.5 |
| Puncture resistance Max load (N) | | 10 | 7 | 10 |
| Elongation at puncture (at max load) (mm) | | 8 | 18 | 24 |
| Film thickness (µm) | | 18 | 22 | 25 |

### Example 1

### Inventive laminate 1:

A laminated material was produced having the following principal structure:
/LDPE/ paperboard //LDPE/mLLDPE/LDPE/-coextrusion// paper substrate/ PVOH/ metallisation/ EAA adhesive/ LDPE/ biaxially oriented LLDPE film BO-F /

The biaxially oriented film BO-F was a pre-manufactured film (SealTOUGH 18XE400 manufactured by Jindal Films) from primarily LLDPE and LDPE, with LLDPE as a major polymer component at above 60 weight-%, extrusion cast and subsequently oriented in both MD and CD, i.e. by biaxial orientation. The film was only 18 µm thick with a few micron thick heat sealable skin layer on its free surface side (towards the inside of a packaging container) comprising m-LLDPE, the degree of orientation being high both in the MD and in the CD. The film had a co-oriented skin layer also on its other side, with a polymer composition different from the core layer. This other skin layer is not needed for the invention but is present mostly for layer symmetry to facilitate in the extrusion casting and subsequent biaxial orientation operations. No tie layers were present.

The standard measurement methods of this application are different from the Jindal internal measurement methods specified in the SealTOUGH data sheet, meaning that the values do not correspond exactly.

The bulk layer, i.e. the paperboard, was laminated to the barrier coated thin paper substrate by melt extrusion lamination with an interjacent bonding layer of 15 g/m² LDPE or by a three-layer coextrusion configuration of /LDPE/ mLLDPE/ LDPE/ with 5 g/m² in each layer. The biaxially oriented LLDPE film BO-F was further laminated to the other side of the barrier-coated paper substrate by melt extrusion lamination of a co-extrusion of a tie layer of 6 g/m² adhesive EAA polymer together with about 13 g/m² of a bonding layer of LDPE, to form an interjacent bonding layer portion, with the EAA adjacent to the barrier-coated paper and the LDPE adjacent to the biaxially oriented LLDPE film BO-F.

### Comparative laminate 1A:

A laminated material was produced having the same principal structure as the Inventive laminate 1, except for using a pre-manufactured, blown LLDPE film A/ :
/LDPE/ paperboard //LDPE/mLLDPE/LDPE/-coextrusion// paper substrate/ PVOH/ metallisation/ EAA adhesive/ LDPE/ Blown LLDPE film A /

The blown LLDPE film A was pre-manufactured by a film blowing process as a single-layer film of 22 µm thickness and comprising about 80 wt-% of LLDPE and about 20 weight-% LDPE.

The same paperboard was laminated to the same barrier-coated thin paper substrate, as in Inventive laminate 1, by melt co-extrusion lamination with an interjacent bonding layer portion of a three-layer configuration of /LDPE/ mLLDPE/ LDPE/ at 5 g/m² each. The blown film A was further laminated to the other side of the barrier-coated paper substrate by melt extrusion lamination of a co-extrusion of 6 g/m² adhesive EAA polymer together with about 13 g/m² of LDPE, to form an interjacent bonding layer portion with the EAA adjacent the barrier-coated paper and the LDPE adjacent the blown LLDPE film A.

### Comparative laminate 1B:

A laminated material was produced having the same principal structure as the Inventive laminate 1, except for using a pre-manufactured, blown LLDPE film B/:
/LDPE/ paperboard/ LDPE/ paper/ PVOH/ metallization/ EAA adhesive/ LDPE/ Blown LLDPE film B /

The blown LLDPE film B was pre-manufactured by a film blowing process into a three-layer film of 25 µm thickness, from primarily LLDPE and LDPE, with LLDPE as a major polymer component at above 60 weight-%, and with a layer of an adhesive polymer of ethylene acrylic acid copolymer, EAA, the core layer comprising about 80 weight-% of LLDPE.

The same paperboard was again laminated to the same barrier-coated thin paper substrate, as in Inventive laminate 1, by melt co-extrusion lamination with an interjacent bonding layer portion of a three-layer configuration of /LDPE/ m-LLDPE/ LDPE/ at 5 g/m² each. The blown film B was further laminated to the other side of the barrier-coated paper substrate by melt extrusion lamination of a co-extrusion of 6 g/m² adhesive EAA polymer together with about 13 g/m² of LDPE, to form an interjacent bonding layer portion with the EAA adjacent the barrier-coated paper and the LDPE adjacent the blown LLDPE film B.

The detailed structure of the above laminated materials are as shown in Table 2.

**Table 2**

| Packaging laminate layers | Inventive laminate 1 | Comparative laminate 1A | Comparative laminate 1B |
|---|---|---|---|
| Outermost protective layer: LDPE 12 g/m² | | | |
| Bulk layer: Liquid Paperboard, 80 mN Duplex, 200 g/m² | | | |
| Lamination layer: LDPE 15 g/m² or 3-layer: 3x 5 g/m² /LDPE/ mLLDPE/ LDPE/ | /LDPE/ mLLDPE/ LDPE/ | /LDPE/ mLLDPE/ LDPE/ | /LDPE/ mLLDPE/ LDPE/ |
| Paper barrier: paper substrate 39 g/m² | | | |
| Barriers: ~1.5 g/m² PVOH; metallization OD ~2 | | | |
| Adhesive polymer: EAA 6 g/m² | | | |
| Bonding layer: LDPE 13 g/m² | | | |
| Innermost heat sealable pre-manufactured polyethylene film, LLDPE-based | Biaxially oriented film BO-F, major part LLDPE, core with thin skin layers | Blown film A; | Blown film B; |
| | | 1-layer, (LLPDE 80: LDPE 20) | 3-layer, /4/15/6/ µm, /LLDPE/ (80 LLDPE: 20 LDPE)/ EAA/ |
| | Thickness 18 µm | Thickness 22 µm | Thickness 25 µm |

The exemplified packaging materials of Table 2 are thus non-foil packaging materials for liquid carton packaging, which have thin, delicate oxygen barrier coatings, and which are generally more vulnerable to stress and strain, than similar laminate materials with an aluminium foil as the oxygen barrier.

### Package and packaging material integrity

Packages were produced from the packaging laminates in table 2 and filled with water in a Tetra Pak^{®} A3/CompactFlex filling machine. This type of filling machine has the capacity to fill portion packages at a speed of 9000 packages/hour and a flexibility that allows for quick change between different package formats. Packages were in the format of Tetra Brik^{®} with a volume of 200 ml. Packages were subsequently emptied, unfolded and studied at the areas of the inside of the laminate, which were exposed to maximal mechanical stress during the filling and forming operations. At these areas, the laminated material has typically been severely stressed by multiple folding, and an example of such a location of a Tetra Brik^{®} package is at the bottom corner flaps.

The one or more polymer layer(s) on the inside of the metallization coating, i.e. on the side directed towards the filled product, were studied by X-ray tomography at these areas of each package. X-ray tomography is an imaging technique that allows to distinguish between the various layers of the laminate, meaning that we can resolve and quantify the thickness of the pre-manufactured polyethylene films and of the inside polymer layers altogether.

Thus, the double-folded areas were evaluated to one of three levels depending on average frequency and size of small weakenings and imperfections, so-called defect initiations, in the inside polymer layers. Although there were no or hardly any actual defects seen in the inside polymer layers, in any of the studied laminates and packages, the evaluation of the initiations, i.e. of potential, later appearing defects upon severe further stress and strain of the filled packages, provides an overview of the potential risk for eventual leakages or un-tightness to occur. The evaluation levels were:
1 = Approved, low level of polymer thinnings and defect initiations as visible by X-ray analysis, ("OK")
2 = Higher approved level of polymer thinnings and defect initiations as visible by X-ray analysis, still within safety margin to prevent potential actual defects to develop, ("Acceptable")
3 = Not approved level of polymer thinnings and defect initiations as visible by X-ray analysis, i.e. not within safety margin to prevent potential actual defects to develop under severe circumstances (" Not acceptable")

**Table 3**

| X-ray tomography study of defect initiations in inside polymer layers; evaluation level 1-3 | Inventive laminate 1 | Comparative laminate 1A | Comparative laminate 1B |
|---|---|---|---|
| Level 1 | 95.6 % | 24.3 % | 73.3 % |
| Level 2 | 4.4 % | 72.5 % | 26.7 % |
| Level 3 | 0.0 % | 3.2 % | 0.0 % |

Furthermore, the metallization coating of the paper barrier structure was evaluated by visible inspection of the double-folded areas with the aid of a magnifying instrument. For this evaluation, a Peak instrument N2044 at magnification of 16 times was used, providing a resolution and precision of 0.1 mm. Table 4 shows the evaluation of very fine defect lines or crack initiations, in the metallization.

**Table 4**

| Defect lines at area of multiple folding in 100 packages | Inventive laminate 1 | Comparative laminate 1A | Comparative laminate 1B |
|---|---|---|---|
| Number of defect lines having a width at most 0.3 mm | 100 % | 91 % | 97 % |
| Number of defect lines having a width above 0.3 mm, at most 0.5 mm | 0% | 9% | 3% |
| Number of defect lines having a width at most 0.5 mm | 0% | 0% | 0% |
| Max value width of defect line (mm) | 0.2 | 0.5 | 0.4 |

Thus, it may be concluded that the laminated material of the present invention has an improved mechanical robustness, such that there is a better safety margin for package integrity, meaning that the inside polymer layers will stay intact and protect the filled contents throughout the storage, distribution and lifetime of the packages. This improved robustness of the inside polymer layers also seems to protect the sensitive barrier coatings in the paper barrier material in an improved manner.

### Tear opening test

The tearing strength according to ISO 1974 (the Elmendorf test) is the force required to continue the tearing started by an initial cut in a piece of a sample sheet to be tested and is expressed in mN. The measurement is normally adapted for paper and paperboard testing but can be used also for laminate materials comprising paper or paperboard, regarding measurement of required tearing force.

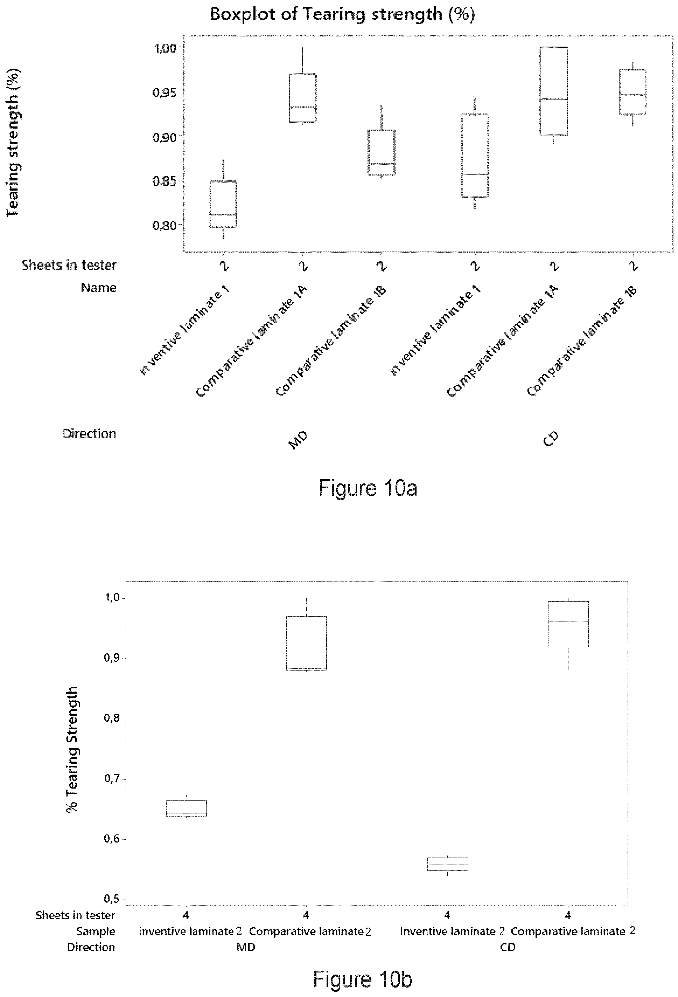

Thus, the results from testing of tearing strength according to ISO 1974 (the Elmendorf test) of the Inventive laminate 1 vs Comparative laminates 1A and 1B are as shown in the diagram in Figure 10a (in the MD and CD, respectively). The diagram shows relative values vs a highest measured value for the tested laminates and thus reflect the relative difference of properties between the laminate of the invention (Inventive laminate 1) and the Comparative laminates 1A and 1B.

Inventive laminate 1 exhibited significantly lower tear strength than Comparative laminate 1A and Comparative laminate 1B in both the MD and CD directions.

This confirms the results of consumer-panel testing of the tear opening capability of these materials, i.e. openability upon tearing the material open, such as for packages having a weakening notch or another weakening such as a tear opening perforation. Thus, the Inventive laminate 1 was also perceived easier to tear open, than the Comparative laminate 1A and the Comparative laminate 1B.

### Total Energy of penetrating a pre-cut, laminated hole with a drinking-straw

The tested laminated materials were during manufacturing and converting operations foreseen with pre-cut, laminated straw holes, one per each package unit. Thus, the bulk layer of paper or paperboard was pre-cut at intervals to obtain one small hole per package unit, having a diameter of 6 mm, suitable for an opening for a drinking straw. In the subsequent lamination operations, to form the laminates that were tested herein, these straw holes were over-laminated, i.e. covered by all the other layers of the laminate. Within the paperboard hole area, the outermost LDPE layer is adhered to the LDPE lamination layer and thus forming a laminated membrane together with the paper barrier and the inside polymer layers, including also the innermost pre-manufactured polyethylene film.

In an internal experiment, a standard compression testing machine (Zwick Roell) was used to evaluate the total energy required for opening the membrane by penetration with a slant-cut metal straw, with similar dimensions as the plastic and paper straws normally used by consumers for opening of portion packages. The purpose of testing with a metal straw, was to eliminate the influence from variations of soft and more flexible slant-cut tips of single-use drinking straws. It was seen that approximately the same total energy (the total area below the measured force curve) was needed for the Inventive laminate 1 and the Comparative laminate 1A. However, as earlier consumer panel tests had more clearly indicated better straw openability for the Inventive laminate 1, this was further investigated to be measured.

It was thus seen that the plotted shape of the required penetration force, i.e. the appearance of the deformation curves, were different between the two laminates, both in MD and CD of the inventive laminated material.

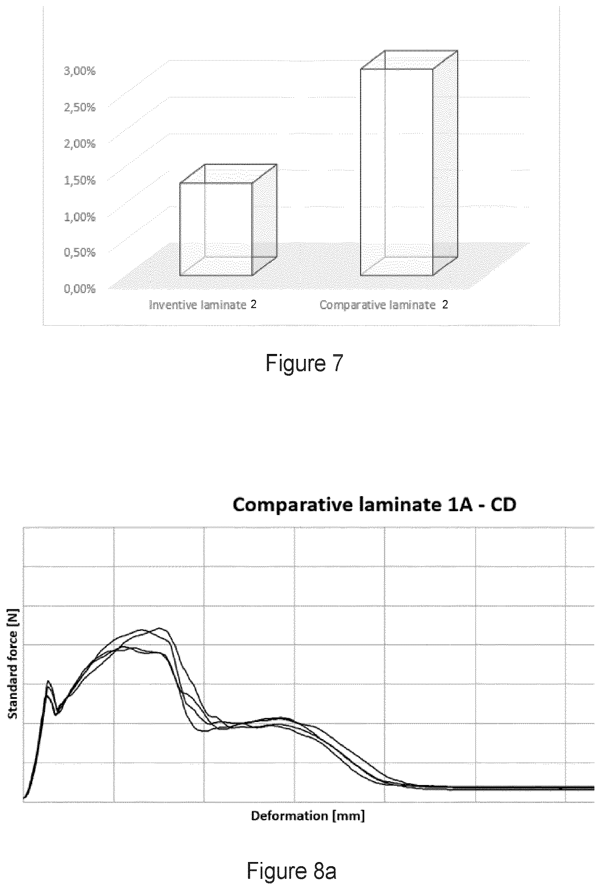

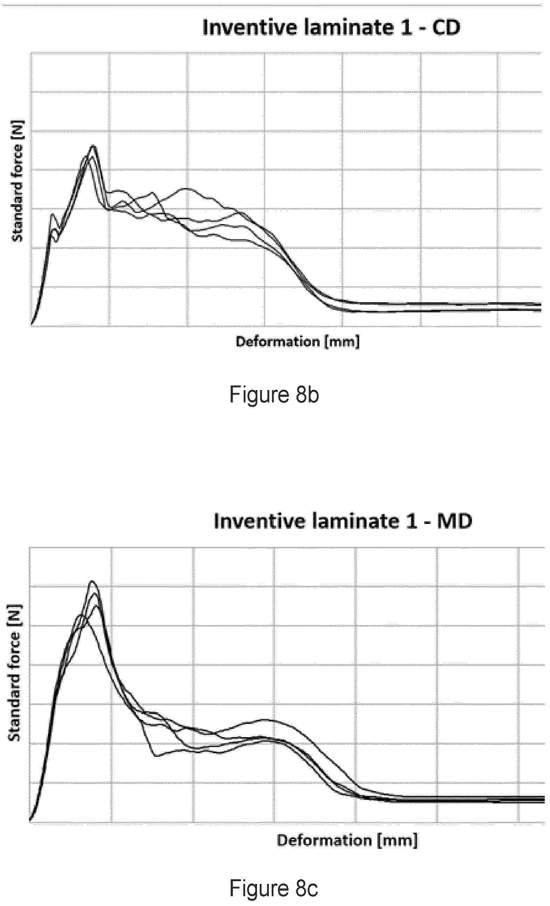

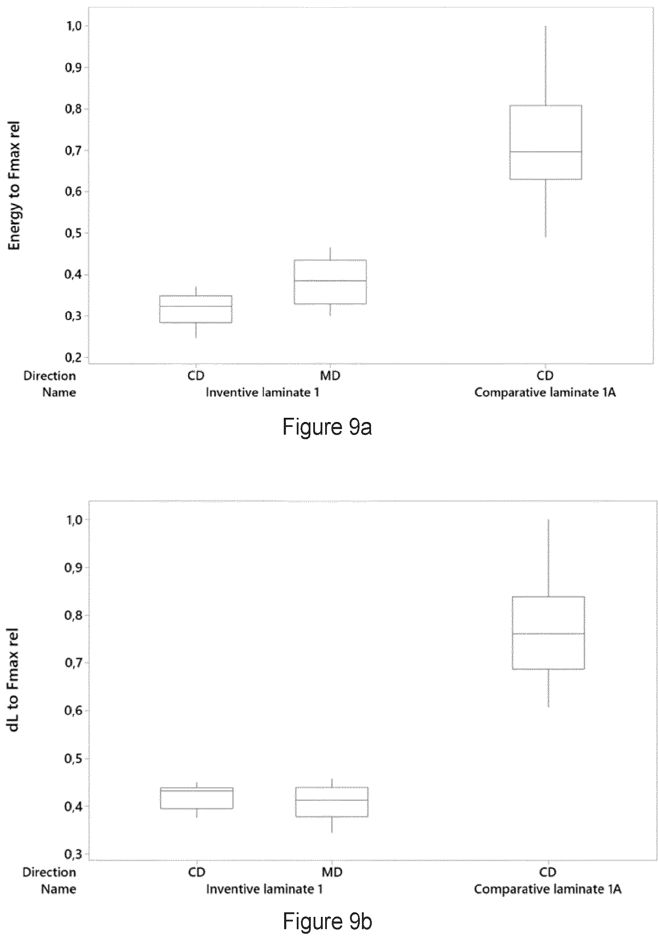

As shown in the diagrams of Fig. 8b and 8c, the plotted force reaches its maximum before penetration much quicker in the Inventive laminate 1 than in the Comparative laminate 1A (Fig. 8a). This may explain the results from the test panel, i.e. that it was easier to open the straw hole with a straw, in the Inventive laminate 1. It is believed that the more distinct pushing-through of the membrane of the hole by the drinking straw, happening directly upon pressing the straw against the membrane, provides this opening experience, although the total force needed at the moment of penetration may be equally high or even higher. In the CD, the required force was measured to be lower, however, with the Inventive laminate 1. This is further illustrated in the diagram of Figure 9a, at measuring the energy required to reach the maximum force, "F-max", i.e. the force measured just before penetration of the membrane, and in the diagram of Figure 9b, at measuring the increase dL of the force up to "F-max", which is steeper with the Inventive laminate 1, thus providing a feeling of quicker, more directly "responding", penetration and opening. The diagrams show relative values vs a highest measured value for both laminates and thus reflect the relative difference of properties between the laminate of the invention (Inventive laminate 1) and the Comparative laminate 1A.

To conclude, also in the case of a straw opening or a pre-cut hole-membrane penetration opening mechanism, the openability is significantly improved by the Inventive laminate 1, despite the fact that the specific pre-manufactured polyethylene film is also much improving packaging integrity and mechanical robustness of the laminated material.

### Example 2

### Inventive laminate 2:

A laminated packaging material was produced having the structure:
/LDPE/ paper for pouch packaging laminate, (0 mN) 72 g/m²/ LDPE/ Aluminium foil/ EAA adhesive/ LDPE/ innermost biaxially oriented polyethylene film BO-F/

The biaxially oriented polyethylene film BO-F was the same pre-manufactured film as described in Example 1 above.

A different bulk layer, i.e. a paper of about 72 g/m², having no inherent bending stiffness and intended for production of paper pouch packages rather than fold-formed, cuboid packaging containers as in Example 1, was laminated to the aluminium foil by melt extrusion lamination with an interjacent bonding layer of 15 g/m² LDPE. The biaxially oriented LLDPE film BO-F was further laminated to the other, inner side of the aluminium foil by melt co-extrusion lamination of a tie layer of 6 g/m² adhesive EAA polymer together with about 13 g/m² of a bonding layer of LDPE, to form an interjacent bonding layer portion, with the EAA adjacent to the aluminium foil and the LDPE adjacent to the biaxially oriented LLDPE film BO-F.

### Comparative laminate 2:

A laminated material was produced having the structure:
/LDPE/ paper 72 g/m²/ LDPE/ Aluminium foil/ blown polyethylene film B/ EAA adhesive polymer/ innermost blend of 70 weight% mLLDPE + 30 weight-% LDPE/

The blown LLDPE film B was the same as in Example 1, in the Comparative laminate 1B.

The same bulk layer, i.e. the paper of about 72 g/m², was laminated to the same aluminium foil as in Inventive laminate 2, by melt extrusion lamination with an interjacent bonding layer of LDPE at about 15 g/m². The blown film B was simultaneously laminated to the other side of the aluminium foil by heat pressure lamination of the foil to the film, which has an adhesive layer of EAA turned towards the aluminium foil. A subsequent co-extrusion onto the other side of the film, of 6 g/m² adhesive EAA polymer together with about 19 g/m² of a blend of 70 weight-% mLLDPE and 30 weight-% LDPE to form an innermost layer, heats the inside layer portion more and longer time, such that the adhesion of the blown film to the aluminium foil improves further.

The detailed structure of the above laminated materials are as shown in Table 5.

**Table 5**

| Packaging laminate layers | Inventive laminate 2 | Comparative laminate 2 |
|---|---|---|
| Outermost protective layer | LDPE 12 g/m² | LDPE 12 g/m² |
| Bulk layer | Liquid Paper bulk, 72 g/m² (0 mN) | Liquid Paper bulk, 72 g/m² (0 mN) |
| Lamination layer | LDPE 15 g/m² | LDPE 15 g/m² |
| Barrier layer | Aluminium foil 6.3 µm | Aluminium foil 6.3 µm |
| Inside layer 1 | EAA adhesive polymer 6 g/m² | Blown film B 3-layer, /4/15/6/ µm, /LLDPE/ (80 LLDPE: 20 LDPE)/ EAA/ Thickness 25 µm |
| Inside layer 2 | Bonding layer LDPE 13 g/m² | EAA adhesive polymer 6 g/m² |
| Innermost layer; inside layer 3 | Biaxially oriented LLDPE film BO-F Thickness 18 µm | 70:30 mLLDPE : LDPE 19 g/m² |

The structure according to Comparative laminate 2, has been the state of the art since years and is seen as the most robust and mechanically strong packaging laminate for paper pouch packaging material. Other pre-manufactured films and configurations were tested over time, but nothing better was found. The strain and stress on the packaging material for such pouch packages (marketed as Tetra Fino^{®} Aseptic) is extraordinary, while the package concept is targeting emerging economies and low-cost segments.

Thus, pouch packaging containers were produced from the laminated materials in Table 5, in a Tetra Pak^{®} A1 filling machine. This type of filling machine has the capacity to fill portion pouch packages at a speed of about 12000 packages/hour. The packages were thus in the format of Tetra Fino^{®} Aseptic, having a volume of 250 ml.

### Transportation test

An adapted vibration and transportation test was used for the purpose of evaluating how such pouch packages can withstand transport, handling and distribution. The vibration test method thus simulates the transportation and distribution of packages. The vibration test is performed according to ASTM D 4728-17: "Standard test Method for Random Vibration Testing of Shipping Containers" and follows a standard vibration cycle program "Level 1" which lasts 45 minutes. Before testing, the pouch packages were packed into secondary carton packages in a standardized manner, with 24 pouches in each secondary carton package. The thus packed distribution cartons were altogether conditioned in a climate chamber until stable temperature and humidity was reached and then placed on a distribution pallet in a further standardized manner, counting 7 layers of secondary cartons stacked on top of each other.

Defects emerge especially at the side panels in the laminated material during re-shaping from a cylindrical tube to pillow-pouch-shape packages. This transformation cannot be carried out geometrically without the formation of some deformations or wrinkles. Such deformations are initial weak points for propagation of fatigue during distribution and handling, and there is a risk that they may eventually transform into defects in the barrier layers and in the seals of the packages.

The vibration test was chosen to cause a certain level of failure in the pouch packages, i.e. of leakage of the filled water content. The number of leaking packages was counted after the thus applied vibration test. Furthermore, the damaged packages may within such a test be classified into different levels of severity of the damages, and further studied regarding details and nature of the damages. For the purpose of the present invention, the percentage of leaking packages was evaluated.

The result from comparing packaging containers made from Inventive laminate 2 and from Comparative laminate 2 is shown in the diagram in Figure 7. It shows that a significantly improved packaging material has now been developed, which can reduce leakages from 3.5 to 1.75 leaking containers per 100, i.e. a reduction by 50 %.

This result is truly surprising, as the packaging material did not have to become thicker at the same time by the addition of more polymer, but rather the opposite.

### Tear opening test

The tearing strength was measured also on samples of the laminates in Table 5, in the same manner as was done on the laminates tested in Example 1, but since the laminated material in this case was thinner the test was performed on a total of four layers of the laminates in Table 5. The tearing strength is the force required to continue a tearing initiated by a small cut in a sample test piece, as measured according to the Elmendorf test, ISO 1974, and is expressed in mN.

The results from comparing the Inventive laminate 2 to Comparative laminate 2 are as shown in the diagram of Figure 10b.

Those results show that, at the same time as the Inventive laminate 2 has become significantly more robust to support the integrity of the pouch packages filled and sealed therefrom, it has also become much easier to open, as shown by the tear openings tests, evaluated in the same way as described above in connection to Example 1. The diagrams show relative values vs a highest measured value for both tested laminates and thus reflect the relative difference of properties between the laminate of the invention (Inventive laminate 2) and the Comparative laminate 2.

Inventive laminate 2 exhibited significantly lower tear strength than Comparative laminate 2 in both MD and CD directions.

This also confirms test results with consumer test panels that evaluated the openability of pouch packages according to the present invention and according to the state of the art. Such panel assessments had established that the pouches from Comparative laminate 2 were in fact not possible to open by tearing, even with the aid of a notch in the material, but had to be cut open by scissors, whereas the pouches from Inventive laminate 2 were readily openable by tearing.

### Conclusions of Examples

The laminated packaging materials of the examples have several advantages.

They exhibited significantly improved package integrity, in that the laminated barrier and inside layers remained well beyond sufficiently intact, despite multiple folding and severe stress in the fold-forming into filled and heat-sealed packages, and in that they endured severe transport and vibration simulation tests for pouch packages. At the same time, significantly improved openability of the laminated packaging materials was proven by tear strength tests and tests regarding the total energy behaviour upon opening with a drinking straw.

It is a true achievement to improve such fundamentally contradicting properties, as package strength and integrity on the one hand, and package openability on the other hand, in a liquid carton laminate. This is beyond normal optimization work, which normally would mean some trade-off and compromise, regarding one type of property or the other, or both.

Generally, such improved contradicting properties further enables increased exploitation of more demanding package formats, such as large-size packages, pouch packages, fold-formed packages involving more severe folding points and more. This is an important advantage, in that different consumer needs may be reflected in more tailor-made packages for different purposes and desires.

Gas barrier properties were ensured to be protected in foldable carton-based laminated materials without the use of thick metal foils, such as the conventional aluminium foil, thus enabling mechanically robust, high performing sustainable packaging materials for aseptic, ambient, long-term storage of liquid food products.

Such materials are more sustainable to the environment and the climate by requiring less carbon dioxide in manufacturing processes, and by simplifying recycling processes, such that only one type of polymer (polyolefin/polyethylene) is used in addition to the cellulose fibres. There will thus be a minimal amount of reject comprising other materials than polyethylene and cellulose. Simplified recycling processes are a pre-requisite for a sustainable, circular economy of materials.

As a final remark, the invention is not limited by the embodiments shown and described above but may be varied within the scope of the claims.

## Claims

1. Laminated packaging material for packaging of liquid food, comprising a bulk layer (11; 21) of paper, paperboard or other cellulose-based material, a first outermost, liquid tight, heat sealable layer (12; 22) comprising a thermoplastic polymer, a barrier layer or barrier multilayer portion (15; 24), comprising at least one gas barrier material, arranged on the opposite, inner side of the bulk layer (11; 21), and a second innermost liquid tight, heat sealable layer (15), on the inner side of the barrier layer or barrier multilayer portion, the second, innermost liquid tight, heat sealable layer (14; 26) being directed towards the inside of a packaging container to be formed from the packaging material, wherein the second innermost liquid tight, heat sealable layer (14; 26) is a pre-manufactured polyethylene film (14; 26) being a cast and biaxially oriented film comprising from 60 to 100 % of linear-low density polyethylene (LLDPE), preferably 80 to 100 % LLDPE, more preferably 90 to 100 % LLDPE, the pre-manufactured polyethylene film further having
- a total thickness from 15 to 25 µm,
- an Elastic Modulus of at least 400 MPa in the MD, and of at least 500 MPa in the CD, as measured by ASTM D 882-02 (2018) with an initial strain rate of 0.1 mm/(mm*min),
- a tensile strength above 40 MPa, preferably above 50 MPa in the MD and above 100 in the CD, as measured by ASTM D638M-14 (2017) at 200 mm/min crosshead rate,
- an elongation at break below 350 % in the MD and below 100 % in the CD, as measured by ASTM D638M-14 (2017) at 200 mm/min crosshead rate,
- a seal initiation temperature, SIT, from 80 to 100 deg C as determined by ASTM F1921 (2018) at 2N,
- a maximum hot-tack force above 7 N, as measured by ASTM F1921 (2018), and
- a puncture resistance of 10 N or higher, as measured according to ASTM F1306-16 (2016) at a crosshead speed of 500 mm/min.

2. Laminated packaging material as claimed in claim 1, wherein the LLDPE of the pre-manufactured polyethylene film (14; 26) has a melt flow ratio/melt flow index (MFR/ MFI) of from 2 to 5 g/10min at 2.16 kg, 190 °C, as measured according to ASTM D1238 or ISO 1133.

3. Laminated packaging material as claimed in claim 1 or claim 2, wherein the pre-manufactured polyethylene film (14; 26) comprises from 60 to 100 % of m-LLDPE, preferably 80 to 100 % m-LLDPE, more preferably 90 to 100 % m-LLDPE.

4. Laminated packaging material as claimed in any one of the preceding claims, wherein the pre-manufactured polyethylene film (14; 26) has a core layer comprising more than 60 weight-% of m-LLDPE, a first "skin" layer on one side of the core layer, also comprising LLDPE, preferably m-LLDPE, and further adapted for heat sealing of the film than the polyethylenes of the core layer, and optionally the pre-manufactured polyethylene film has a second skin layer on the other side of the core layer.

5. Laminated packaging material as claimed in any one of the preceding claims, wherein the pre-manufactured polyethylene film (14; 26) has a total thickness from 16 to 23 µm, such as from 16 to 20 µm.

6. Laminated packaging material as claimed in claim 4, wherein the core layer of the pre-manufactured polyethylene film (14; 26) has a thickness from 10 to 16 µm, such as from 10 to 14 µm.

7. Laminated packaging material as claimed in any one of claims 4-6, wherein the thickness of the first skin layer, and of the optional second skin layer, is from 1 to 3, such as from 2 to 3 µm.

8. Laminated packaging material as claimed in any one of the preceding claims, wherein the pre-manufactured polyethylene film (14; 26) has a seal initiation temperature, SIT, from 80 to 95 deg C, such as from 80 to 90 deg C, as determined by ASTM F1921 (2018) at 2N.

9. Laminated packaging material as claimed in any one of the preceding claims, wherein the pre-manufactured polyethylene film (14; 26) has a maximum hot-tack force above 8 N, as measured by ASTM F1921 (2018).

10. Laminated packaging material as claimed in any one of the preceding claims, wherein the pre-manufactured polyethylene film (14; 26) has a puncture resistance of 10 N or higher, as measured according to ASTM F1306-16 (2016) at a crosshead speed of 500 mm/min, and exhibits a lower elongation at puncture (i.e. at maximum load) than 10 mm.

11. Laminated packaging material as claimed in any one of the preceding claims, wherein the barrier multilayer portion (15) comprises a paper substrate (15a) which has at least one coating (15b-15d) of a gas barrier material applied onto it.

12. Laminated packaging material as claimed in claim 11, wherein the the coating(s) (15b-15d) comprise a gas barrier polymer and/or a vapour deposition coating of a gas barrier material selected from metals, metal oxides, inorganic oxides and amorphous diamond-like carbon coatings.

13. Laminated packaging material as claimed in any one of the preceding claims, wherein the barrier layer or barrier multilayer portion (14; 26) is laminated to the bulk layer (11; 21) by means of a first bonding layer (16; 25) of one or more polymers.

14. Laminated packaging material as claimed in any one of the preceding claims, wherein the pre-manufactured polyethylene film (14; 26) is laminated to the barrier layer or barrier multilayer portion (15; 24) by means of a second bonding layer (17b; 28) of a thermoplastic polymer.

15. Laminated packaging material as claimed in any one of the preceding claims, wherein the pre-manufactured polyethylene film (14; 26) has a stretching ratio from 5 to 7 in the machine direction, MD, and from 7 to 10 in the cross direction, CD.

16. Laminated packaging material as claimed in any one of the preceding claims, comprising a paperboard bulk layer (11) having a grammage from 100 to 520 g/m², such as from 200 to 300 g/m², and a barrier multilayer portion (15), wherein the barrier multilayer portion (15) comprises a paper substrate (15a) which has at least one coating (15b-15d) of a gas barrier material applied onto it preferably at from 2 to 5000 nm (5 µm), to provide a more environmentally sustainable and recyclable packaging material.

17. Laminated packaging material as claimed in any one of Claims 1 to 15, comprising a bulk layer being a paper core layer (21) having a grammage from 50 to 140 g/m², such as from 70 to 120 g/m², such as from 70 to 110 g/m², and a barrier layer (24) of an aluminium foil, for the purpose of manufacturing of pouch packages.

18. Method for manufacturing of a laminated packaging material (10; 20), as defined in any one of the preceding claims, comprising the steps, in any order, of
a) laminating (30b,35b) a continuous web of a bulk layer (11; 21; 34b) of paper, paperboard or other cellulose-based material to the outer side of a continuous web of a barrier layer or barrier multilayer portion (15; 24; 31b) comprising at least one gas barrier material,
b) laminating (35c,37c) a continuous web of a pre-manufactured inside polyethylene film (14; 26; 38c), as a second innermost liquid tight, heat sealable layer, to the other, inner side of the web of the barrier layer or barrier multilayer portion (15; 24; 31b), such as by melt extrusion lamination, with an interjacent, second bonding layer (17a,17b; 27,28; 36c) of a bonding polymer, and
c) extrusion coating (32c, 34c) a first outermost, liquid tight, heat sealable layer (12; 22; 33c) on the outer side of the bulk layer (11; 21; 31c; 34b), wherein
the pre-manufactured polyethylene film (14; 26; 38c) is a cast and biaxially oriented film comprising from 60 to 100 % of linear-low density polyethylene (LLDPE), preferably 80 to 100 % LLDPE, more preferably 90 to 100 % LLDPE, the pre-manufactured polyethylene film further having
- a total thickness from 15 to 25 µm,
- an Elastic Modulus of at least 400 MPa in the MD, and of at least 500 MPa in the CD, as measured by ASTM D 882-02 (2018) at 10 mm/min crosshead rate,
- a tensile strength above 40 MPa, preferably above 50 MPa, in the MD and above 100 in the CD, as measured by ASTM D638M-14 (2017) at 200 mm/min crosshead rate,
- an elongation at break below 350 % in the MD and below 100 % in the CD, as measured by ASTM D638M-14 (2017) at 200 mm/min crosshead rate,
- a seal initiation temperature, SIT, from 80 to 100 deg C as determined by ASTM F1921 (2018) at 2N,
- a maximum hot tack force above 7 N, as measured by ASTM F1921 (2018),
- a puncture resistance of 10 N or higher, as measured according to ASTM F1306-16 (2016) at a crosshead speed of 500 mm/min.

19. Method as claimed in claim 18, wherein step a) is carried out by wet applying an aqueous dispersion of an adhesive composition comprising an adhesive polymer binder onto the web of the bulk layer (11; 21) or onto the web of the barrier layer or multilayer barrier portion (15; 24) at an amount from 1 to 5 g/m² dry weight, and pressing the two webs together while they are forwarded through a lamination roller nip, without forced drying.

20. Packaging container (50a; 50b; 50c; 50d) for packaging of oxygen sensitive food products, such as of liquid, semi-liquid or viscous food products or water, comprising the laminated packaging material (10; 20) as defined in any one of claims 1-17.

## Patentansprüche

1. Laminiertes Verpackungsmaterial zum Verpacken von flüssigen Lebensmitteln, umfassend eine Volumenschicht (11; 21) aus Papier, Pappe oder anderem Material auf Cellulosebasis, eine erste, äußerste, flüssigkeitsdichte heißsiegelfähige Schicht (12; 22) umfassend ein thermoplastisches Polymer, eine Barriereschicht oder einen mehrschichtigen Barriereabschnitt (15; 24) umfassend wenigstens ein Gasbarrierematerial, angeordnet an der gegenüberliegenden inneren Seite der Volumenschicht (11; 21), und eine zweite, innerste, flüssigkeitsdichte heißsiegelfähige Schicht (15) an der inneren Seite der Barriereschicht oder des mehrschichtigen Barriereabschnitts, wobei die zweite, innerste, flüssigkeitsdichte heißsiegelfähige Schicht (14; 26) in Richtung zu dem Inneren eines Verpackungsbehälters, der aus dem Verpackungsmaterial gebildet werden soll, zeigt, wobei die zweite, innerste, flüssigkeitsdichte heißsiegelfähige Schicht (14; 26) eine vorgefertigte Polyethylenfolie (14; 26) ist, die eine gegossene und biaxial orientierte Folie ist, die 60 bis 100 % an linearem Polyethylen mit niedriger Dichte (LLDPE), vorzugsweise 80 bis 100 % LLDPE, bevorzugter 90 bis 100 % LLDPE, umfasst, wobei die vorgefertigte Polyethylenfolie ferner aufweist
- eine Gesamtdicke von 15 bis 25 µm,
- einen Elastizitätsmodul von wenigstens 400 MPa in der MD und von wenigstens 500 MPa in der CD, wie gemessen nach ASTM D 882-02 (2018) mit einer Anfangsdehnungsrate von 0,1 mm/ (mm*min),
- eine Zugfestigkeit über 40 MPa, vorzugsweise über 50 MPa, in der MD und über 100 in der CD, wie gemessen nach ASTM D638M-14 (2017) bei 200 mm/min Kreuzkopfgeschwindigkeit,
- eine Bruchdehnung von unter 350 % in der MD und unter 100 % in der CD, wie gemessen nach ASTM D638M-14 (2017) bei 200 mm/min Kreuzkopfgeschwindigkeit,
- eine Siegelstarttemperatur, SIT, von 80 bis 100 °C, wie bestimmt nach ASTM F1921 (2018) bei 2N,
- eine maximale Heißklebekraft über 7 N, wie gemessen nach ASTM F1921 (2018), und
- eine Durchstoßfestigkeit von 10 N oder höher, wie gemessen nach ASTM F1306-16 (2016) bei einer Kreuzkopfgeschwindigkeit von 500 mm/min.

2. Laminiertes Verpackungsmaterial nach Anspruch 1, wobei das LLDPE der vorgefertigten Polyethylenfolie (14; 26) ein Schmelzflussverhältnis/Schmelzflussindex (MFR/MFI) von 2 bis 5 g/10 min bei 2,16 kg, 190 °C, wie gemessen nach ASTM D1238 oder ISO 1133, aufweist.

3. Laminiertes Verpackungsmaterial nach Anspruch 1 oder Anspruch 2, wobei die vorgefertigte Polyethylenfolie (14; 26) von 60 bis 100 % m-LLDPE, vorzugsweise 80 bis 100 % m-LLDPE, bevorzugter 90 bis 100 % m-LLDPE, umfasst.

4. Laminiertes Verpackungsmaterial nach einem der vorstehenden Ansprüche, wobei die vorgefertigte Polyethylenfolie (14; 26) eine Kernschicht, die mehr als 60 Gew.-% m-LLDPE umfasst, eine erste "Haut"-Schicht an einer Seite der Kernschicht, die ebenfalls LLDPE umfasst, vorzugsweise m-LLDPE, aufweist und ferner zum Heißsiegeln der Folie an die Polyethylene der Kernschicht ausgelegt ist, und wobei die vorgefertigte Polyethylenfolie gegebenenfalls eine zweite Hautschicht an der anderen Seite der Kernschicht aufweist.

5. Laminiertes Verpackungsmaterial nach einem der vorstehenden Ansprüche, wobei die vorgefertigte Polyethylenfolie (14; 26) eine Gesamtdicke von 16 bis 23 µm, wie z.B. von 16 bis 20 µm, aufweist.

6. Laminiertes Verpackungsmaterial nach Anspruch 4, wobei die Kernschicht der vorgefertigten Polyethylenfolie (14; 26) eine Dicke von 10 bis 16 pm, wie z.B. von 10 bis 14 µm, aufweist.

7. Laminiertes Verpackungsmaterial nach einem der Ansprüche 4-6, wobei die Dicke der ersten Hautschicht und der optionalen zweiten Hautschicht von 1 bis 3, wie z.B. von 2 bis 3 µm, beträgt.

8. Laminiertes Verpackungsmaterial nach einem der vorstehenden Ansprüche, wobei die vorgefertigte Polyethylenfolie (14; 26) eine Siegelstarttemperatur, SIT, von 80 bis 95 °C, wie z.B. von 80 bis 90 °C, wie bestimmt nach ASTM F1921 (2018) bei 2N, aufweist.

9. Laminiertes Verpackungsmaterial nach einem der vorstehenden Ansprüche, wobei die vorgefertigte Polyethylenfolie (14; 26) eine maximale Heißklebekraft von über 8 N, wie gemessen nach ASTM F1921 (2018), aufweist.

10. Laminiertes Verpackungsmaterial nach einem der vorstehenden Ansprüche, wobei die vorgefertigte Polyethylenfolie (14; 26) eine Durchstoßfestigkeit von 10 N oder höher, wie gemessen nach ASTM F1306-16 (2016) bei einer Kreuzkopfgeschwindigkeit von 500 mm/min, und eine geringere Dehnung bei Durchstoß (d.h. bei maximaler Belastung) als 10 mm aufweist.

11. Laminiertes Verpackungsmaterial nach einem der vorstehenden Ansprüche, wobei der mehrschichtige Barriereabschnitt (15) ein Papiersubstrat (15a) umfasst, das wenigstens eine Beschichtung (15b-15d) aus einem Gasbarrierematerial darauf aufgebracht aufweist.

12. Laminiertes Verpackungsmaterial nach Anspruch 11, wobei die Beschichtung(en) (15b-15d) ein Gasbarrierepolymer und/oder eine Aufdampfbeschichtung aus einem Gasbarrierematerial ausgewählt aus Metallen, Metalloxiden, anorganischen Oxiden und amorphen diamantartigen Kohlenstoffbeschichtungen umfasst.

13. Laminiertes Verpackungsmaterial nach einem der vorstehenden Ansprüche, wobei die Barriereschicht oder der mehrschichtige Barriereabschnitt (14; 26) mithilfe einer ersten Bindeschicht (16; 25) aus einem oder mehreren Polymeren an die Volumenschicht (11; 21) laminiert ist.

14. Laminiertes Verpackungsmaterial nach einem der vorstehenden Ansprüche, wobei die vorgefertigte Polyethylenfolie (14; 26) mithilfe einer zweiten Bindeschicht (17b; 28) aus einem thermoplastischen Polymer an die Barriereschicht oder den mehrschichtigen Barriereabschnitt (15; 24) laminiert ist.

15. Laminiertes Verpackungsmaterial nach einem der vorstehenden Ansprüche, wobei die vorgefertigte Polyethylenfolie (14; 26) ein Streckverhältnis von 5 bis 7 in der Maschinenrichtung, MD, und von 7 bis 10 in der Querrichtung, CD, aufweist.

16. Laminiertes Verpackungsmaterial nach einem der vorstehenden Ansprüche, umfassend eine Pappe-Volumenschicht (11) mit einem Flächengewicht von 100 bis 520 g/m², wie z.B. von 200 bis 300 g/m², und einen mehrschichtigen Barriereabschnitt (15), wobei der mehrschichtige Barriereabschnitt (15) ein Papiersubstrat (15a) umfasst, das wenigstens eine Beschichtung (15b-15d) aus einem Gasbarrierematerial, vorzugsweise mit 2 bis 5000 nm (5 µm), darauf aufgebracht aufweist, um ein umweltfreundlicheres und recycelbares Verpackungsmaterial bereitzustellen.

17. Laminiertes Verpackungsmaterial nach einem der Ansprüche 1 bis 15, umfassend eine Volumenschicht, die eine Papierkernschicht (21) mit einem Flächengewicht von 50 bis 140 g/m2, wie z.B. von 70 bis 120 g/m2, wie z.B. von 70 bis 110 g/m2, ist, und eine Barriereschicht (24) aus einer Aluminiumfolie, für den Zweck der Herstellung von Beutelverpackungen.

18. Verfahren zur Herstellung eines laminierten Beutelverpackungsmaterials (10; 20) nach einem der vorstehenden Ansprüche, umfassend die Schritte, in beliebiger Reihenfolge, von
a) Laminieren (30b, 35b) einer kontinuierlichen Bahn einer Volumenschicht (11; 21; 34b) aus Papier, Pappe oder einem anderen Material auf Cellulosebasis an die Außenseite einer kontinuierlichen Bahn einer Barriereschicht oder eines mehrschichtigen Barriereabschnitts (15; 24; 31b), die wenigstens ein Gasbarrierematerial umfasst,
b) Laminieren (35c, 37c) einer kontinuierlichen Bahn einer vorgefertigten inneren Polyethylenfolie (14; 26; 38c) als eine zweite, innerste, flüssigkeitsdichte heißsiegelfähige Schicht an die andere Innenseite der Bahn der Barriereschicht oder des mehrschichtigen Barriereabschnitts (15; 24; 31b), wie z.B. durch Schmelzextrusionslamination, mit einer dazwischenliegenden, zweiten Bindeschicht (17a, 17b; 27, 28; 36) aus einem Polymer, und
c) Extrusionsbeschichten (32c, 34c) einer ersten, äußersten, flüssigkeitsdichten heißsiegelfähigen Schicht (12; 22; 33c) an die Außenseite der Volumenschicht (11; 21; 31 c; 34b), wobei
die vorgefertigte Polyethylenfolie (14; 26; 38c) eine gegossene und biaxial orientierte Folie ist, die 60 bis 100 % an linearem Polyethylen mit niedriger Dichte (LLDPE), vorzugsweise 80 bis 100 % LLDPE, bevorzugter 90 bis 100 % LLDPE, umfasst, wobei die vorgefertigte Polyethylenfolie ferner aufweist
- eine Gesamtdicke von 15 bis 25 µm,
- einen Elastizitätsmodul von wenigstens 400 MPa in der MD und von wenigstens 500 MPa in der CD, wie gemessen nach ASTM D 882-02 (2018) bei 10 mm/min Kreuzkopfgeschwindigkeit,
- eine Zugfestigkeit von über 40 MPa, vorzugsweise über 50 MPa, in der MD und über 100 in der CD, wie gemessen nach ASTM D638M-14 (2017) bei 200 mm/min Kreuzkopfgeschwindigkeit,
- eine Bruchdehnung von unter 350 % in der MD und unter 100 % in der CD, wie gemessen nach ASTM D638M-14 (2017) bei 200 mm/min Kreuzkopfgeschwindigkeit,
- eine Siegelstarttemperatur, SIT, von 80 bis 100 °C, wie bestimmt nach ASTM F1921 (2018) bei 2N,
- eine maximale Heißklebekraft über 7 N, wie gemessen nach ASTM F1921 (2018),
- eine Durchstoßfestigkeit von 10 N oder höher, wie gemessen nach ASTM F1306-16 (2016) bei einer Kreuzkopfgeschwindigkeit von 500 mm/min.

19. Verfahren nach Anspruch 18, wobei Schritt a) durch Nassaufbringen einer wässrigen Dispersion einer Klebstoffzusammensetzung, die ein haftfähiges Polymerbindemittel umfasst, auf die Bahn der Volumenschicht (11; 21) oder auf die Bahn der Barriereschicht oder des mehrschichtigen Barriereabschnitts (15; 24) in einer Menge von 1 bis 5 g/m² Trockengewicht und Zusammenpressenh der beiden Bahnen, während sie durch einen Laminierwalzenspalt geführt werden, ohne forcierte Trocknung durchgeführt wird.

20. Verpackungsbehälter (50a; 50b; 50c; 50d) zum Verpacken von sauerstoffempfindlichen Lebensmittelprodukten, wie z.B. von flüssigen, halbflüssigen oder viskosen Lebensmittelprodukten oder Wasser, umfassend das laminierte Verpackungsmaterial (10; 20) nach einem der Ansprüche 1-17.

## Revendications

1. Matériau d'emballage stratifié pour l'emballage de produit alimentaire liquide, comprenant une couche de masse (11 ; 21) de papier, carton ou d'autre matériau à base de cellulose, une première couche thermoscellable, étanche aux liquides, la plus à l'extérieur (12 ; 22) comprenant un polymère thermoplastique, une couche barrière ou une partie de multicouche barrière (15 ; 24) comprenant au moins un matériau barrière aux gaz, disposée sur le côté interne opposé de la couche de masse (11 ; 21), et une seconde couche thermoscellable, étanche aux liquides, la plus à l'intérieur (15), sur le côté interne de la couche barrière ou de la partie de multicouche barrière, la seconde couche thermoscellable, étanche aux liquides, la plus à l'intérieur (14 ; 26) étant dirigée vers l'intérieur d'un récipient d'emballage devant être formé à partir du matériau d'emballage, la seconde couche thermoscellable, étanche aux liquides, la plus à l'intérieur (14 ; 26) étant un film de polyéthylène préfabriqué (14 ; 26) qui est un film coulé et orienté biaxialement comprenant de 60 à 100 % de polyéthylène linéaire basse densité (LLDPE), de préférence de 80 à 100 % de LLDPE, plus préférablement de 90 à 100 % de LLDPE, le film de polyéthylène préfabriqué ayant en outre
- une épaisseur totale de 15 à 25 µm,
- un module élastique d'au moins 400 MPa dans le sens machine et d'au moins 500 MPa dans le sens transversal, comme mesuré selon la norme ASTM D 882-02 (2018) avec une vitesse de déformation initiale de 0,1 mm/(mm*min),
- une résistance à la traction supérieure à 40 MPa, de préférence supérieure à 50 MPa dans le sens machine et supérieure à 100 dans le sens transversal, comme mesurée selon la norme ASTM D638M-14 (2017) à une vitesse de tête de piston de 200 mm/min,
- un allongement à la rupture inférieur à 350 % dans le sens machine et inférieur à 100 % dans le sens transversal, comme mesuré selon la norme ASTM D638M-14 (2017) à une vitesse de tête de piston de 200 mm/min,
- une température d'initiation de scellement, SIT, de 80 à 100 °C, comme déterminée selon la norme ASTM F1921 (2018) à 2 N,
- une force de thermocollage maximale supérieure à 7 N, comme mesurée selon la norme ASTM F1921 (2018), et
- une résistance à la perforation de 10 N ou plus, comme mesurée selon la norme ASTM F1306-16 (2016) à une vitesse de tête de piston de 500 mm/min.

2. Matériau d'emballage stratifié selon la revendication 1, dans lequel le LLDPE du film de polyéthylène préfabriqué (14 ; 26) présente un rapport de fluidité à chaud/indice de fluidité à chaud (MFR/MFI) de 2 à 5 g/10 min à 2,16 kg, 190 °C, comme mesuré selon la norme ASTM D1238 ou ISO 1133.

3. Matériau d'emballage stratifié selon la revendication 1 ou la revendication 2, dans lequel le film de polyéthylène préfabriqué (14 ; 26) comprend de 60 à 100 % de m-LLDPE, de préférence de 80 à 100 % de m-LLDPE, plus préférablement de 90 à 100 % de m-LLDPE.

4. Matériau d'emballage stratifié selon l'une quelconque des revendications précédentes, dans lequel le film de polyéthylène préfabriqué (14 ; 26) a une couche centrale comprenant plus de 60 % en poids de m-LLDPE, une première couche de « peau » sur un côté de la couche centrale, comprenant également du LLDPE, de préférence du m-LLDPE, et adaptée davantage pour le thermoscellage du film que les polyéthylènes de la couche centrale, et éventuellement le film de polyéthylène préfabriqué a une seconde couche de peau sur l'autre côté de la couche centrale.

5. Matériau d'emballage stratifié selon l'une quelconque des revendications précédentes, dans lequel le film de polyéthylène préfabriqué (14 ; 26) a une épaisseur totale de 16 à 23 µm, par exemple de 16 à 20 µm.

6. Matériau d'emballage stratifié selon la revendication 4, dans lequel la couche centrale du film de polyéthylène préfabriqué (14 ; 26) a une épaisseur de 10 à 16 µm, par exemple de 10 à 14 µm.

7. Matériau d'emballage stratifié selon l'une quelconque des revendications 4 à 6, dans lequel l'épaisseur de la première couche de peau, et de la seconde couche de peau éventuelle, est de 1 à 3, telle que de 2 à 3 µm.

8. Matériau d'emballage stratifié selon l'une quelconque des revendications précédentes, dans lequel le film de polyéthylène préfabriqué (14 ; 26) a une température d'initiation de scellement, SIT, de 80 à 95 °C, telle que de 80 à 90 °C, comme déterminée selon la norme ASTM F1921 (2018) à 2 N.

9. Matériau d'emballage stratifié selon l'une quelconque des revendications précédentes, dans lequel le film de polyéthylène préfabriqué (14 ; 26) a une force de thermocollage maximale supérieure à 8 N, comme mesurée selon la norme ASTM F1921 (2018).

10. Matériau d'emballage stratifié selon l'une quelconque des revendications précédentes, dans lequel le film de polyéthylène préfabriqué (14 ; 26) a une résistance à la perforation de 10 N ou plus, telle que mesurée selon la norme ASTM F1306-16 (2016) à une vitesse de tête de piston de 500 mm/min, et présente un allongement à la perforation plus faible (c'est-à-dire à une charge maximale) que 10 mm.

11. Matériau d'emballage stratifié selon l'une quelconque des revendications précédentes, dans lequel la partie de multicouche barrière (15) comprend un substrat en papier (15a) sur lequel est appliqué au moins un revêtement (15b-15d) d'un matériau barrière aux gaz.

12. Matériau d'emballage stratifié selon la revendication 11, dans lequel le ou les revêtements (15b-15d) comprennent un polymère barrière aux gaz et/ou un revêtement par dépôt en phase vapeur d'un matériau barrière aux gaz choisi parmi les métaux, les oxydes métalliques, les oxydes inorganiques et les revêtements de carbone de type diamant amorphe.

13. Matériau d'emballage stratifié selon l'une quelconque des revendications précédentes, dans lequel la couche barrière ou la partie de multicouche barrière (14 ; 26) est stratifiée sur la couche de masse (11 ; 21) au moyen d'une première couche de liaison (16 ; 25) d'un ou plusieurs polymères.

14. Matériau d'emballage stratifié selon l'une quelconque des revendications précédentes, dans lequel le film de polyéthylène préfabriqué (14 ; 26) est stratifié sur la couche barrière ou la partie de multicouche barrière (15 ; 24) au moyen d'une seconde couche de liaison (17b ; 28) d'un polymère thermoplastique.

15. Matériau d'emballage stratifié selon l'une quelconque des revendications précédentes, dans lequel le film de polyéthylène préfabriqué (14 ; 26) a un rapport d'étirage de 5 à 7 dans le sens machine, MD, et de 7 à 10 dans le sens transversal, CD.

16. Matériau d'emballage stratifié selon l'une quelconque des revendications précédentes, comprenant une couche de masse de carton (11) ayant un grammage de 100 à 520 g/m², tel que de 200 à 300 g/m², et une partie de multicouche barrière (15), dans lequel la partie de multicouche barrière (15) comprend un substrat en papier (15a) sur lequel est appliqué au moins un revêtement (15b-15d) d'un matériau barrière aux gaz, de préférence à raison de 2 à 5 000 nm (5 µm), afin d'obtenir un matériau d'emballage plus durable pour l'environnement et recyclable.

17. Matériau d'emballage stratifié selon l'une quelconque des revendications 1 à 15, comprenant une couche de masse qui est une couche centrale en papier (21) ayant un grammage de 50 à 140 g/m², tel que de 70 à 120 g/m², tel que de 70 à 110 g/m² , et une couche barrière (24) d'une feuille d'aluminium, aux fins de fabrication d'emballages de type sachet.

18. Procédé de fabrication d'un matériau d'emballage stratifié (10 ; 20), tel que défini dans l'une quelconque des revendications précédentes, comprenant les étapes, dans un ordre quelconque, de
a) stratification (30b, 35b) d'une bande continue d'une couche de masse (11 ; 21 ; 34b) de papier, de carton ou d'un autre matériau à base de cellulose sur la face externe d'une bande continue d'une couche barrière ou d'une partie de multicouche barrière (15 ; 24 ; 31b) comprenant au moins un matériau barrière aux gaz,
b) stratification (35c, 37c) d'une bande continue d'un film de polyéthylène intérieur préfabriqué (14 ; 26 ; 38c), en tant que seconde couche thermoscellable, étanche aux liquides, la plus à l'intérieur, sur l'autre face interne de la bande de la couche barrière ou de la partie de multicouche barrière (15 ; 24 ; 31b), telle que par stratification par extrusion à l'état fondu, avec une seconde couche de liaison, intermédiaire (17a, 17b ; 27, 28 ; 36c) d'un polymère de liaison, et
c) revêtement par extrusion (32c, 34c) d'une première couche thermoscellable, étanche aux liquides, la plus à l'extérieur (12 ; 22 ; 33c) sur le côté externe de la couche de masse (11 ; 21 ; 31c ; 34b), dans lequel le film de polyéthylène préfabriqué (14 ; 26 ; 38c) est un film coulé et orienté biaxialement comprenant de 60 à 100 % de polyéthylène linéaire basse densité (LLDPE), de préférence de 80 à 100 % de LLDPE, plus préférablement de 90 à 100 % de LLDPE, le film de polyéthylène préfabriqué ayant en outre
- une épaisseur totale de 15 à 25 µm,
- un module élastique d'au moins 400 MPa dans le sens machine et d'au moins 500 MPa dans le sens transversal, comme mesuré selon la norme ASTM D 882-02 (2018) à une vitesse de tête de piston de 10 mm/min,
- une résistance à la traction supérieure à 40 MPa, de préférence supérieure à 50 MPa, dans le sens machine et supérieure à 100 dans le sens transversal, comme mesurée selon la norme ASTM D638M-14 (2017) à une vitesse de tête de piston de 200 mm/min,
- un allongement à la rupture inférieur à 350 % dans le sens machine et inférieur à 100 % dans le sens transversal, comme mesuré selon la norme ASTM D638M-14 (2017) à une vitesse de tête de piston de 200 mm/min,
- une température d'initiation de scellement, SIT, de 80 à 100 °C, comme déterminée selon la norme ASTM F1921 (2018) à 2 N,
- une force de thermocollage maximale supérieure à 7 N, comme mesurée selon la norme ASTM F1921 (2018),
- une résistance à la perforation de 10 N ou plus, comme mesurée selon la norme ASTM F1306-16 (2016) à une vitesse de tête de piston de 500 mm/min.

19. Procédé selon la revendication 18, dans lequel l'étape a) est effectuée par application par voie humide d'une dispersion aqueuse d'une composition d'adhésif comprenant un liant polymère adhésif sur la bande de la couche de masse (11 ; 21) ou sur la bande de la couche barrière ou de la partie de multicouche barrière (15 ; 24) à raison d'une quantité de 1 à 5 g/m² de poids sec, et par pressage des deux bandes ensemble tandis qu'elles sont acheminées à travers un écartement des cylindres de stratification, sans séchage forcé.

20. Récipient d'emballage (50a ; 50b ; 50c ; 50d) pour emballer des produits alimentaires sensibles à l'oxygène, tels que des produits alimentaires liquides, semi-liquides ou visqueux ou de l'eau, comprenant le matériau d'emballage stratifié (10 ; 20) tel que défini dans l'une quelconque des revendications 1 à 17.
